# EUROPEAN PATENT APPLICATION

(11) **EP 1 632 330 A1**
(43) Date of publication of application: **08.03.2006**
(21) Application number: 04709749.8
(22) Date of filing: 10.02.2004
(51) Int. Cl.: B29C 45/70, B29C 45/14, B29C 45/26

(54) **MOLDING METHOD, DIE FOR MOLDING, MOLDED ARTICLE, AND MOLDING MACHINE**

(30) Priority: 22.05.2003 JP 2003144861
(71) Applicant: SUMITOMO HEAVY INDUSTRIES, LTD., Shinagawa-ku, Tokyo 141-8686 (JP)
(72) Inventor: TAKIGAWA, Naoki, Yotsukaido-shi, Chiba 284-0044 (JP)
(74) Representative: Emde, Eric
(86) International application number: PCT/JP2004/001404
(87) International publication number: WO 2004/103682

(57) **Abstract**

It is enabled to produce in short time a molded product having a shape resembling that of a three-dimensional, deep-bottomed, concave container having a thin side wall, even by use of a molding material of poor moldability, such as an environmental low-load-type material. Before completion of a mold closing step of a mold apparatus, charging the molding material into a cavity of the mold apparatus is started; before completion of the mold closing step, charging the molding material in a predetermined amount is completed; and after completion of the mold closing step, a mold clamping step of the mold apparatus is performed so as to produce a molded product of the environmental low-load-type material

## Description

### TECHNICAL FIELD

The present invention relates to a molding method, a mold for molding, a molded product, and a molding machine.

### BACKGROUND ART

Conventionally, in a resin molding machine, such as an injection molding machine, a resin that is melted in a heating cylinder through application of heat is injected under high pressure into a cavity of a mold apparatus, and the molten resin is cooled and solidified within the cavity, thereby producing a molded product. To perform such molding, the mold apparatus includes a stationary mold and a movable mold. A mold-clamping apparatus advances or retreats the movable mold so as to bring the movable mold into contact with or move the movable mold away from the stationary mold, thereby performing mold opening/closing; i.e., mold closing, mold clamping, and mold opening (Refer to, for example, Japanese Patent Application Laid-Open (kokai) No. 6-293043).

Mold closing is to bring a mold in an opened condition into a condition where the parting faces thereof are brought into contact with each other. Mold clamping is to apply a mold-clamping force to the mold whose parting faces are in contact with each other.

In order to prevent deformation of a molded product, to improve the molecular orientation of resin, and to reduce residual stress, there has been proposed an injection compression molding method in which a resin is charged into a cavity while the cavity is slightly expanded; subsequently, mold clamping is performed so as to compress the resin contained in the cavity. Injection compression molding methods are known to be broadly divided into a Rolinx process and a micromold process.

The Rolinx process was developed in the 1960s by Rolinx Corp., a mold maker in the UK. Rolinx processes are divided into a process in which a resin contained in a cavity is pressurized and compressed without the parting faces of a mold apparatus being opened apart from each other, and a process in which a resin contained in a cavity is pressurized and compressed with the parting faces of a mold apparatus being opened. In the process in which the parting faces of the mold apparatus are not opened apart from each other, a molten resin is injected into the cavity; subsequently, the expanded cavity is contracted so as to pressurize and compress the resin. In this case, in order to prevent generation of burrs resulting from the resin leaking into the clearance between the parting faces, a hydraulic cylinder apparatus or a spring presses the parting faces against each other.

In the process in which the resin contained in the cavity is pressurized and compressed with the parting faces of the mold apparatus being opened, the movable mold is slightly retreated from the stationary mold so as to slightly open the parting faces apart from each other; a molten resin is injected into the cavity with the parting faces in the slightly opened condition; subsequently, the movable mold is advanced to the stationary mold so as to perform mold closing and mold clamping, thereby pressurizing and compressing the resin contained in the cavity.

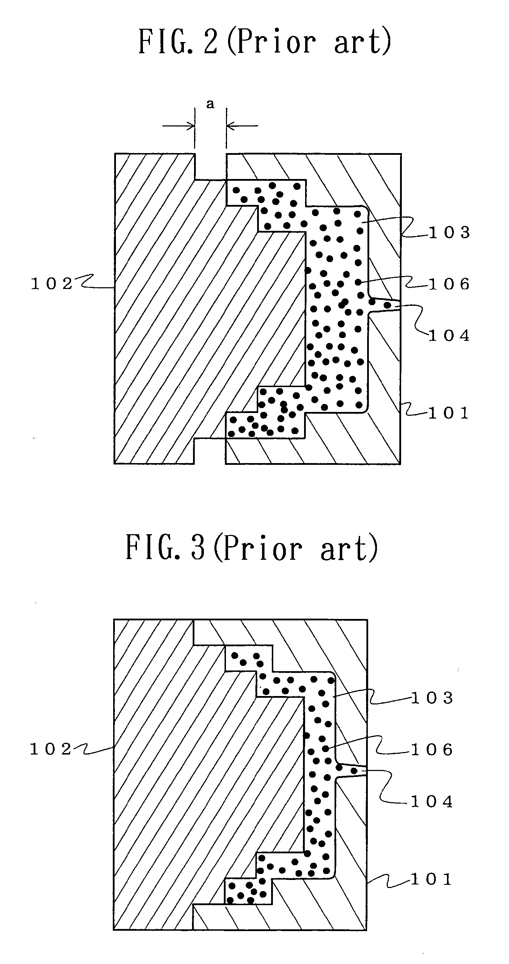

FIG. 2 shows a state in which a molten resin is charged into a cavity in a conventional molding method. FIG. 3 shows a state in which the resin contained in the cavity is pressurized and compressed in the conventional molding method.

In the drawings, reference numeral 101 denotes a stationary mold attached to an unillustrated stationary platen, and reference numeral 102 denotes a movable mold attached to an unillustrated movable platen. The movable mold 102 is advanced toward and retreated from the stationary mold 101. A cavity 103 is formed between the stationary mold 101 and the movable mold 102, and a molten resin 106 is charged into the cavity 103. A runner 104 communicating with the cavity 103 is formed in the stationary mold 101. The molten resin 106 ejected from an injection nozzle of an unillustrated injection apparatus is charged into the cavity 103 through the runner 104.

When the molten resin 106 is ejected from the injection nozzle of the injection apparatus and charged into the cavity 103 through the runner 104, as shown in FIG. 2, the movable mold 102 is slightly retreated from the stationary mold 101 such that the parting faces of a mold apparatus are opened apart from each other by a dimension a. Accordingly, the cavity 103 is slightly expanded, and no pressure is imposed on the molten resin 106 charged into the cavity 103. In order to prevent generation of burrs resulting from the molten resin 106 leaking through the clearance between the parting faces that are opened apart from each other, the mold apparatus is of a so-called shear type in which the mold faces of the stationary mold 101 and the movable mold 102 are in the form of a tongue-and-groove joint.

Subsequently, an unillustrated mold-clamping apparatus is operated to advance the movable mold 102 to the stationary mold 101, thereby contracting the expanded cavity 103. Mold closing and mold clamping are thus performed as shown in FIG. 3, thereby pressurizing and compressing the molten resin 106 contained in the cavity 103.

In the micromold process, before a molten resin is injected into a cavity, the volume of the cavity is expanded so as to allow for the quantity of compression. At an appropriate timing after the molten resin is charged into the cavity, a hydraulic cylinder apparatus or the like advances a movable mold and a core of a mold so as to contract the expanded cavity, thereby pressurizing and compressing the molten resin.

Use of the injection compression molding method, such as the Rolinx process or the micromold process, provides uniform pressure distribution in the molten resin, thereby improving the molecular orientation of the resin, enhancing the performance of transfer from the surface of the mold, preventing sinkage of the resin, reducing residual stress in a molded product, and preventing deformation of the molded product. Thus, the injection compression molding method is used to produce molded products that must be of high accuracy, such as precision parts, optical lenses, light guide discs, compact discs, optical discs, and laser discs.

However, being developed for application to production of molded products having a planar shape, such as discs, the conventional injection compression molding method has failed to mold products having a three-dimensional shape, such as deep-bottomed containers.

In recent years, in view of resource saving and environmental concerns, there has been a demand for molded products of environmental low-load-type materials whose load imposed on the environment is low, such as recyclable materials, reusable materials, and biodegradable materials. For example, demand exists to produce various kinds of molded products, such as containers and automobile parts, by use, as molding materials, of mixtures of a resin and paper, wood, or the like, and environmental low-load-type materials, such as biodegradable materials. However, environmental low-load-type materials are lower in fluidity and poorer in moldability than molding materials, such as resin, used in the conventional injection compression process, and thus are difficult to mold. For example, in the case of molding of a deep-bottomed container, such as a cup, having a great height in relation to the diameter of the opening, the employment of a thin side wall means that a flow path for a molding material within a cavity becomes narrow. This causes a failure of the injected molding material to sufficiently reach the entire cavity, resulting in occurrence of a defective product. Particularly, in the case of a molding material of poor moldability, even use of the conventional injection compression process encounters a failure in the molding material passing through a portion of the cavity corresponding to the thin side wall, so that a deep-bottomed container cannot be molded.

An object of the present invention is to solve the above-mentioned conventional problems and to provide a molding method capable of producing in short time a molded product having a shape resembling that of a three-dimensional, deep-bottomed, concave container having a thin side wall, even by use of a molding material of poor moldability, such as an environmental low-load-type material, as well as a mold for molding for use in the same, a molded product obtained by the same, and a molding machine for implementing the same.

### DISCLOSURE OF THE INVENTION

To achieve the above object, a molding method of the present invention comprises starting, before completion of a mold closing step of a mold apparatus, charging a molding material into a cavity of the mold apparatus; completing, before completion of the mold closing step, the charging of the molding material in a predetermined amount; and performing, after completion of the mold closing step, a mold clamping step of the mold apparatus so as to produce a molded product of an environmental low-load-type material.

In another molding method of the present invention, the molding material is charged into the cavity in the predetermined amount by means of controlling a position of a screw of an injection apparatus or a charge time of the molding material.

In still another molding method of the present invention, the screw is advanced so as to charge the molding material in the predetermined amount, and, after completion of the charging of the molding material in the predetermined amount, the screw is retreated so as to adjust a dwell pressure for controlling an amount of backflow of the molding material from the cavity.

A mold for molding of the present invention comprises a stationary mold having a parting face; a movable mold having a parting face to be pressed, in a close contact condition, against the parting face of the stationary mold, and advancing toward the stationary mold; an insert ring having a base portion fixed to one of the parting faces, and a projecting portion; and an annular groove formed on the other parting face and receiving the projecting portion of the insert ring. The mold for molding is used for molding an environmental low-load-type material.

A molded product of the present invention is of the environmental low-load-type material and is produced by the molding method according to any one of claims 1 to 3.

Another molded product of the present invention is a thin-walled concave container molded by an injection molding machine; has a wall thickness of 0.2 mm to 1.0 mm; and is produced from an environmental low-load-type material.

Still another molded product of the present invention is a concave container produced from an environmental low-load-type material. The container has an L/T ratio (L: length of the molded product corresponding to a length of flow of the molding material as measured from a gate; T: wall thickness of the molded product) of 30 to 300.

A further molding method of the present invention comprises starting, in a mold-closed condition before completion of a mold closing step of a mold apparatus, charging a molding material into a cavity having a bottom portion substantially perpendicular to an opening-closing direction of the mold apparatus, and a thin side wall portion inclined in relation to the opening-closing direction; completing, before completion of the mold closing step, the charging of the molding material in a predetermined amount into the cavity in such a manner that at least a portion of the side wall portion is not charged with the molding material; and performing, after completion of the mold closing step, a mold clamping step of the mold apparatus so as to produce a molded product of an environmental low-load-type material.

In yet another molding method of the present invention, a label is placed within the cavity, and in-mold labeling and molding are performed together.

Another mold for molding of the present invention comprises a stationary mold having a parting face; a movable mold having a parting face to be pressed, in a close contact condition, against the parting face of the stationary mold, and forming, between the same and the stationary mold and in a mold-closed condition, a cavity having a bottom portion substantially perpendicular to an opening-closing direction, and a thin side wall portion inclined in relation to the opening-closing direction; an annular projection member disposed on one of the parting faces; and an annular groove formed on the other parting face and receiving the annular projection member. The mold for molding is used for molding an environmental low-load-type material.

A molding machine of the present invention comprises a mold apparatus for producing a molded product from an environmental low-load-type material by use of a stationary mold and a movable mold. The mold apparatus has a cavity for forming an outline of the molded product. The cavity, with the stationary mold and the movable mold in a mold-closed condition, includes a bottom portion substantially perpendicular to an opening-closing direction of the mold apparatus, and a thin side wall portion inclined in relation to the opening-closing direction.

Another molding machine of the present invention molds an environmental low-load-type material by use of a mold apparatus. The mold apparatus comprises a stationary mold having a parting face; a movable mold having a parting face to be pressed, in a close contact condition, against the parting face of the stationary mold, and advancing toward the stationary mold; an annular projection member disposed on one of the parting faces; and an annular groove formed on the other parting face and receiving the projection member.

### BRIEF DESCRIPTION OF THE DRAWINGS

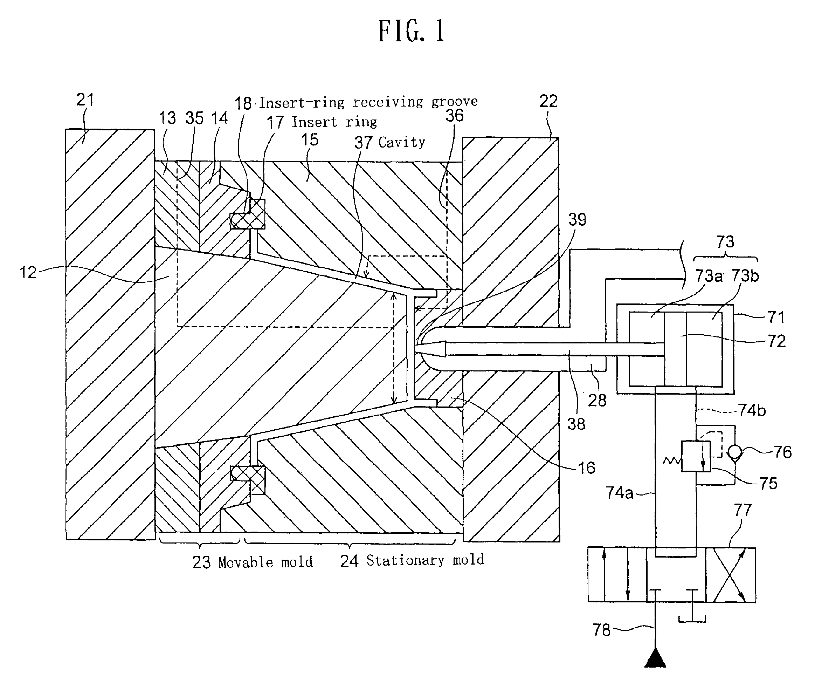

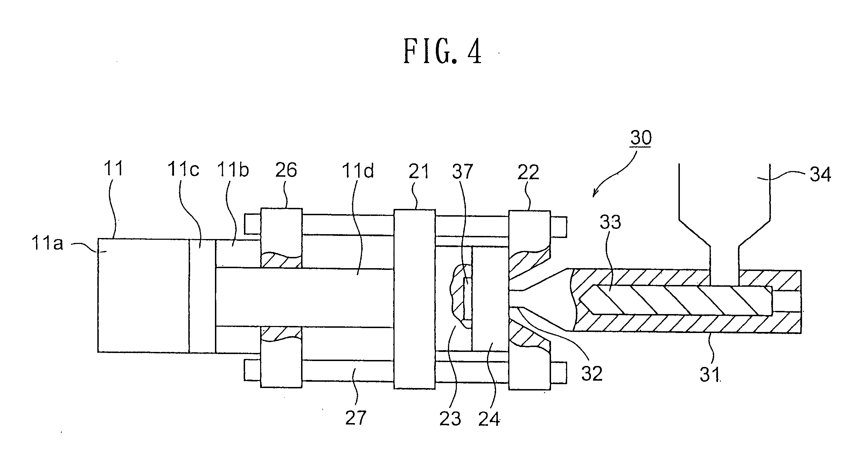

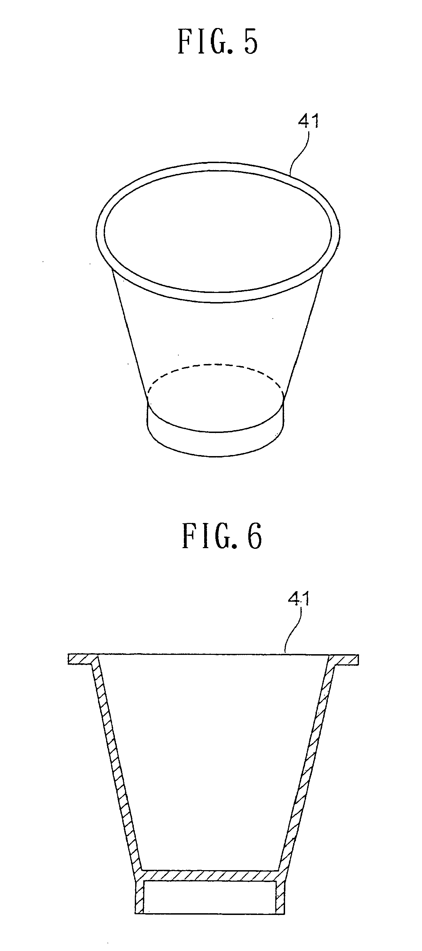

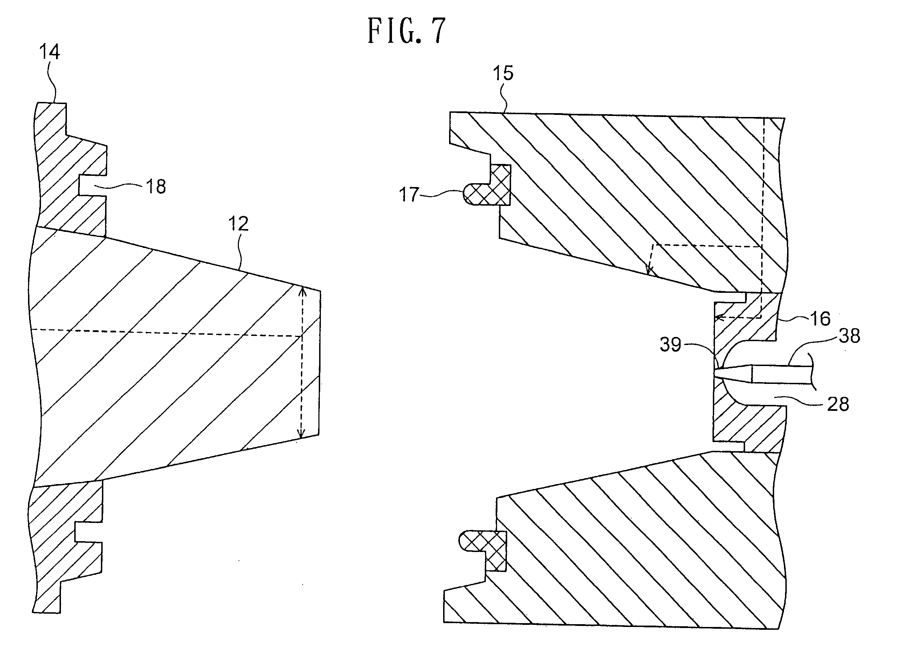

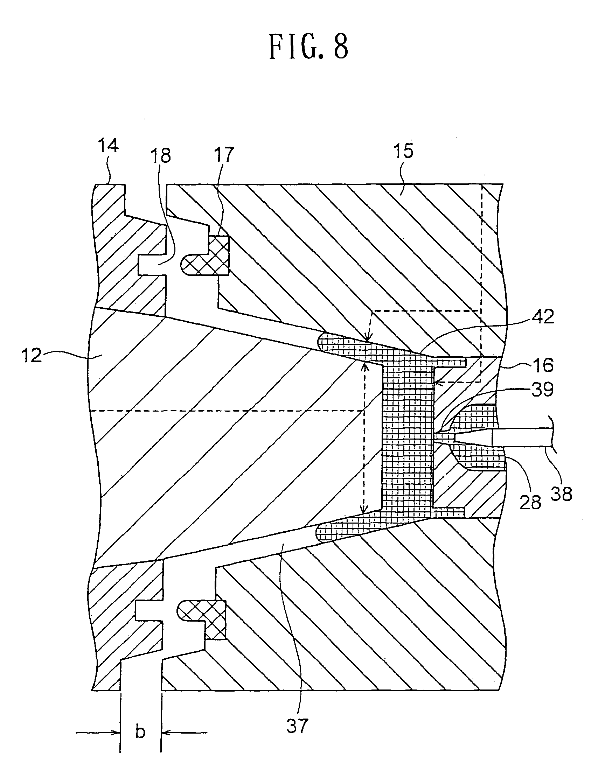

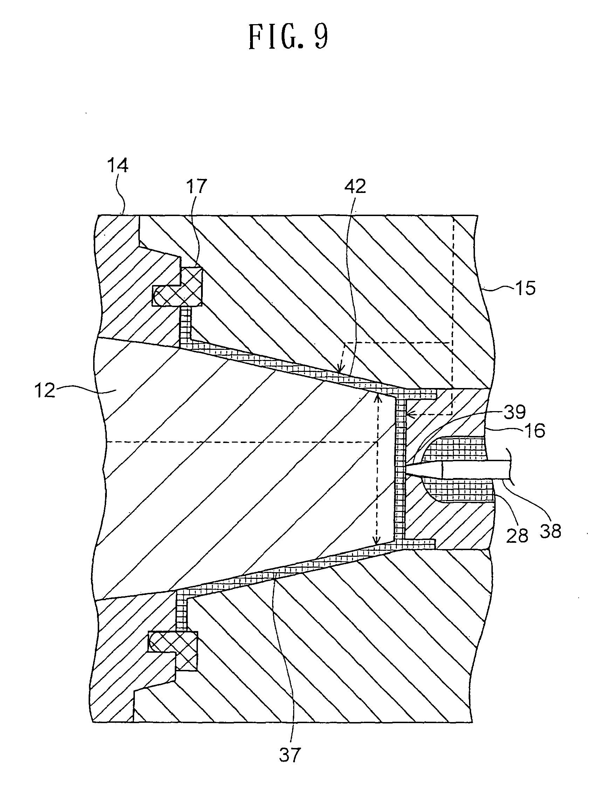

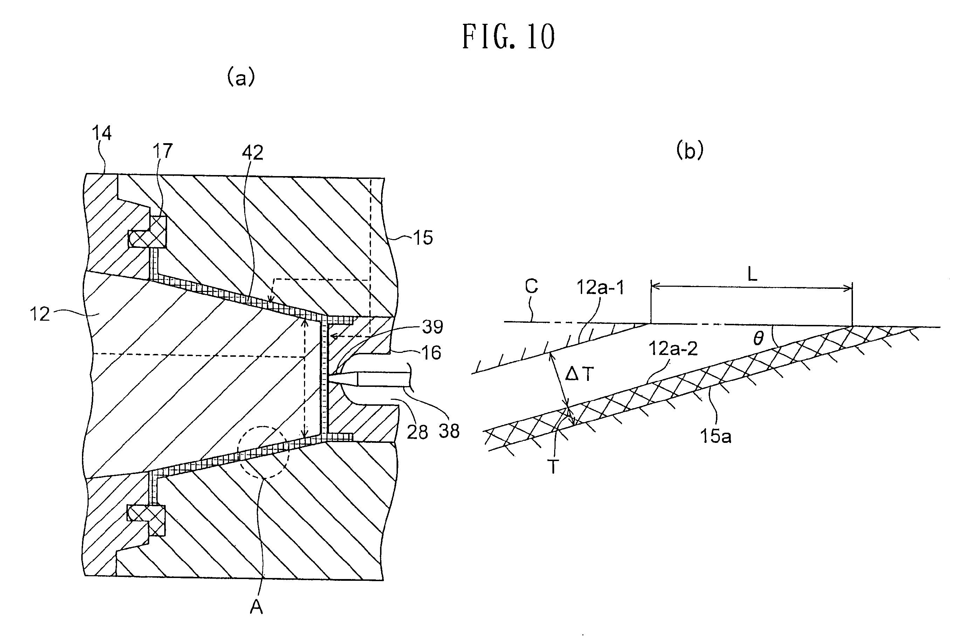

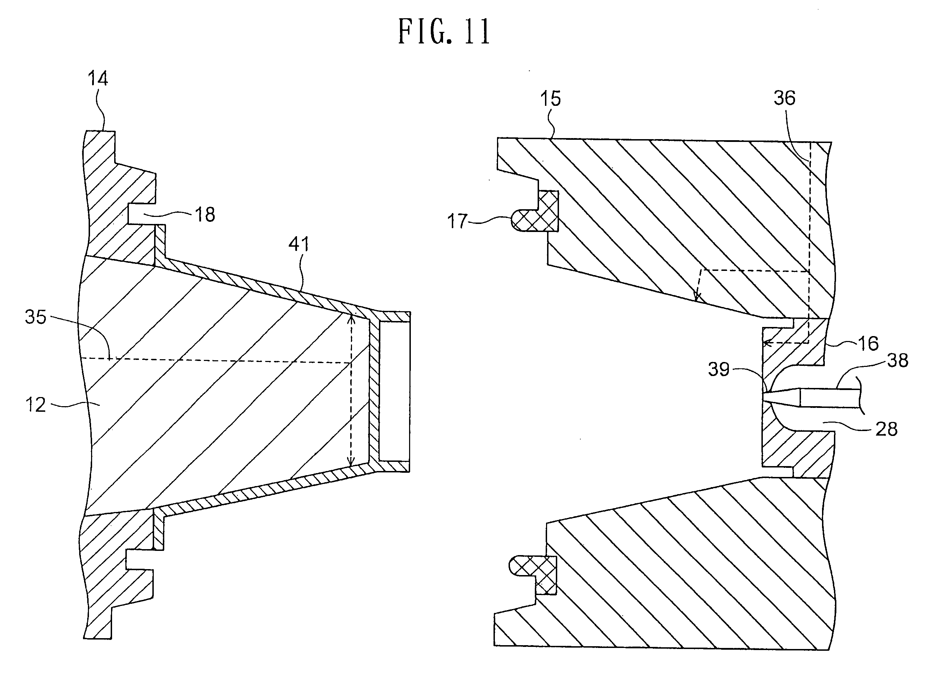

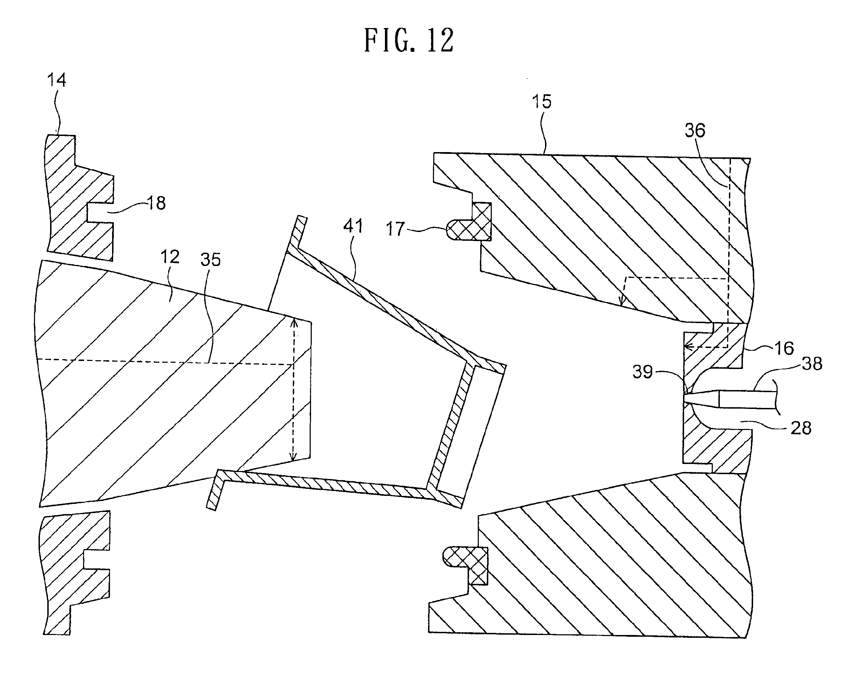

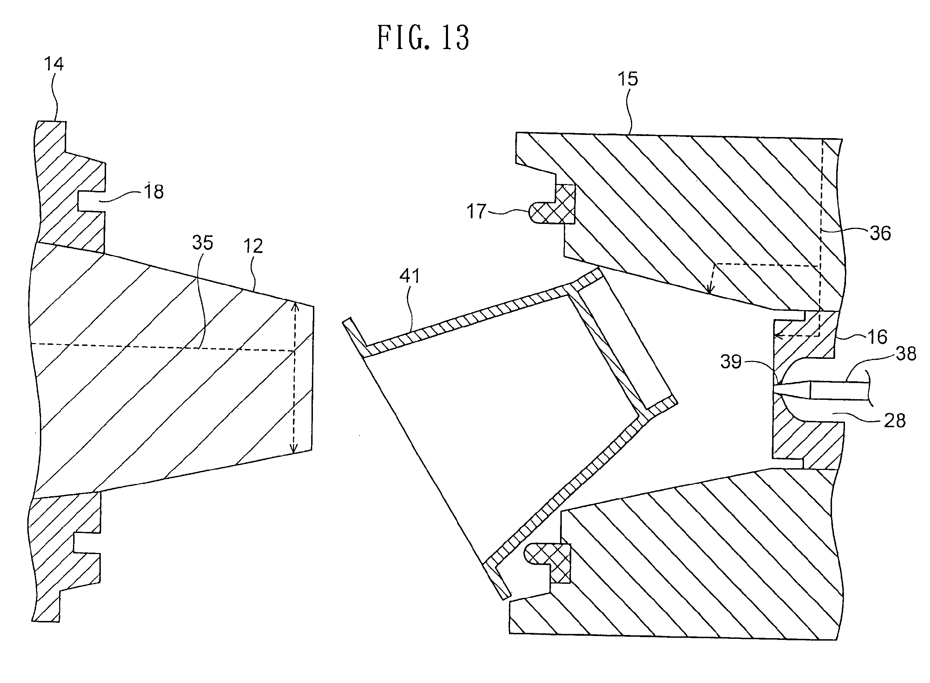

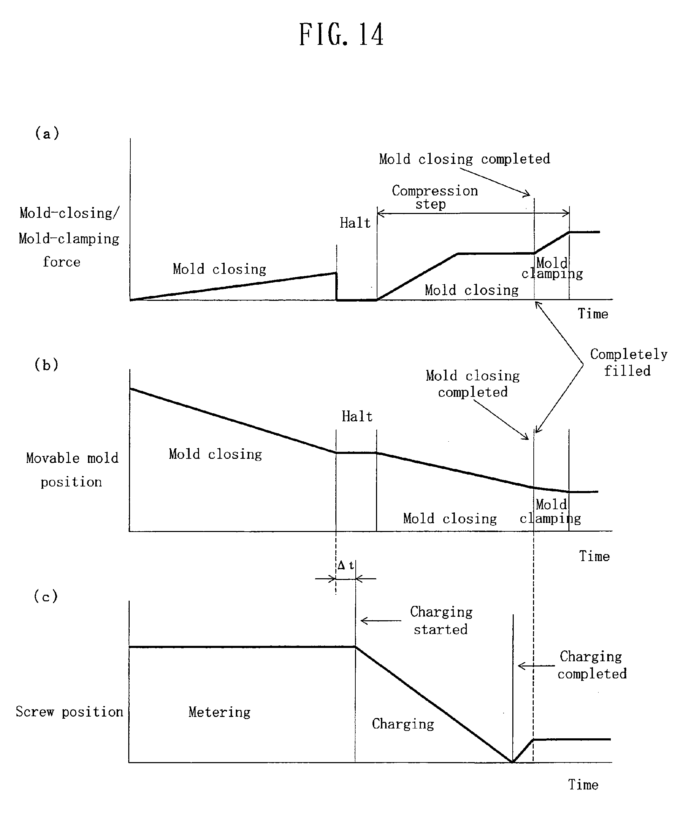

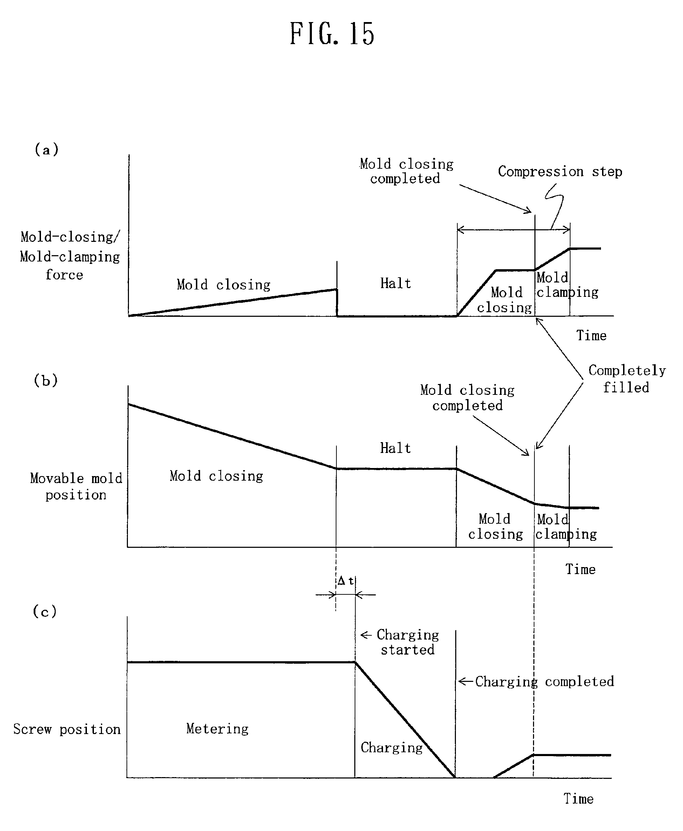

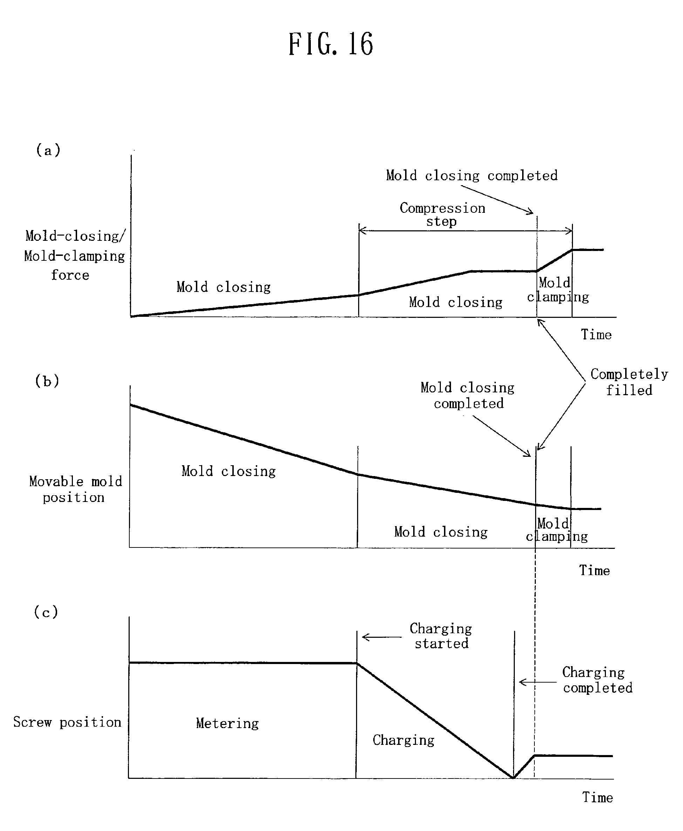

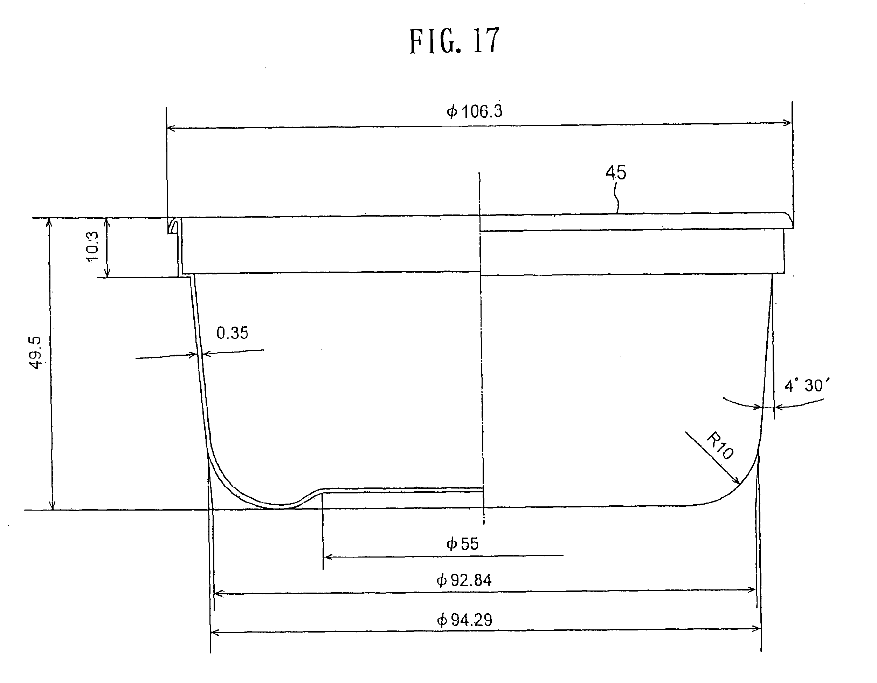

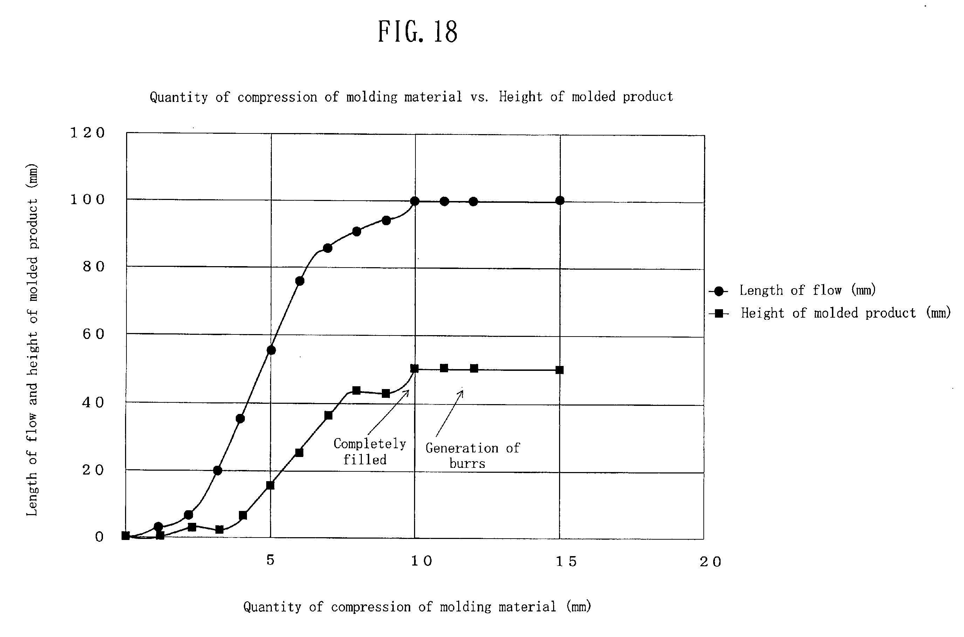

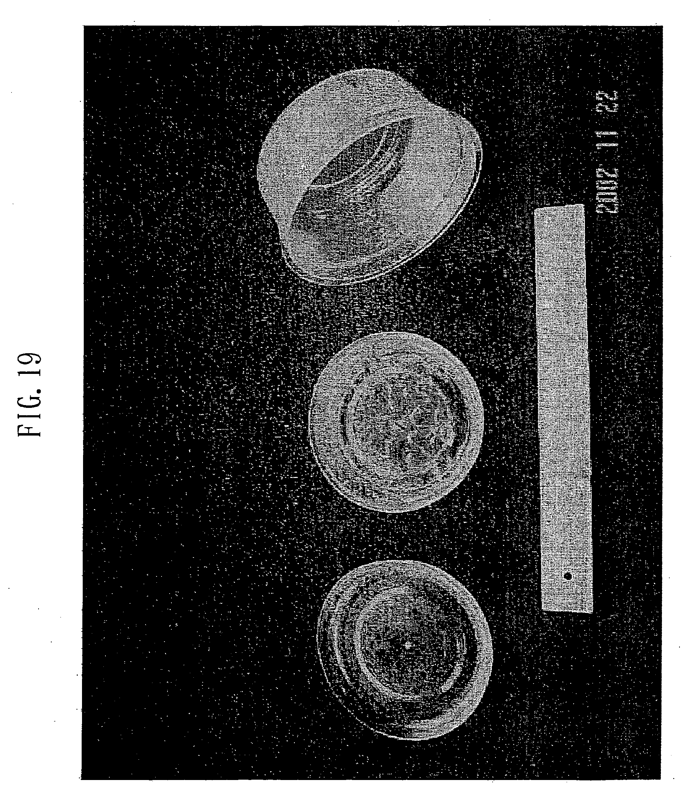

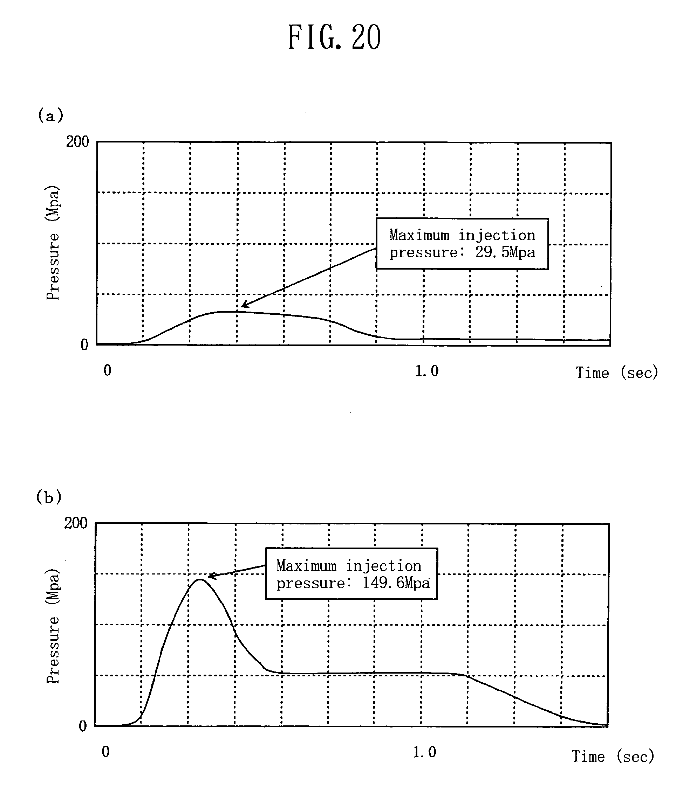

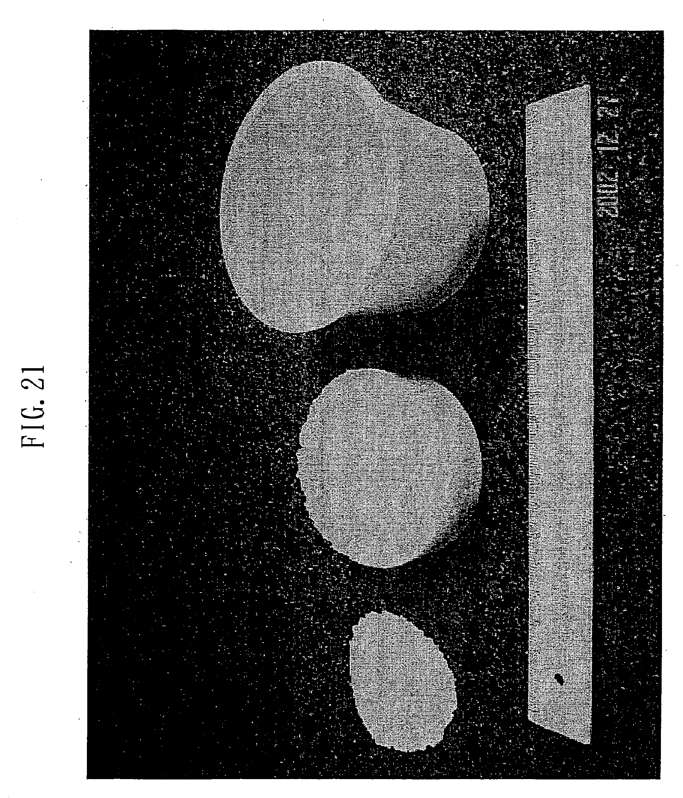

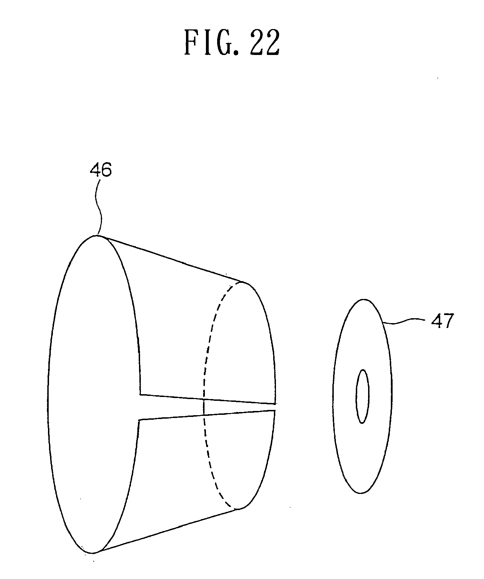

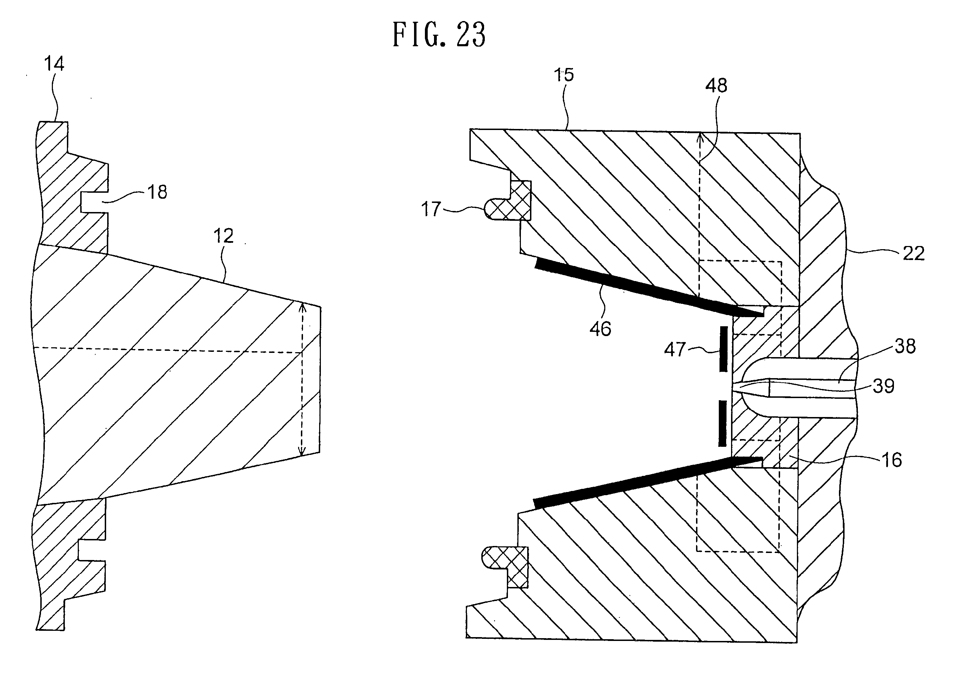

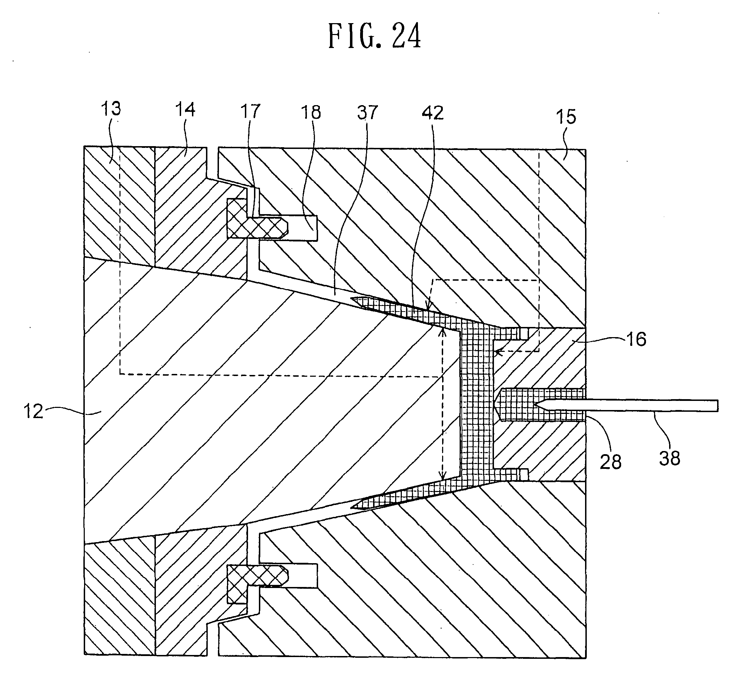

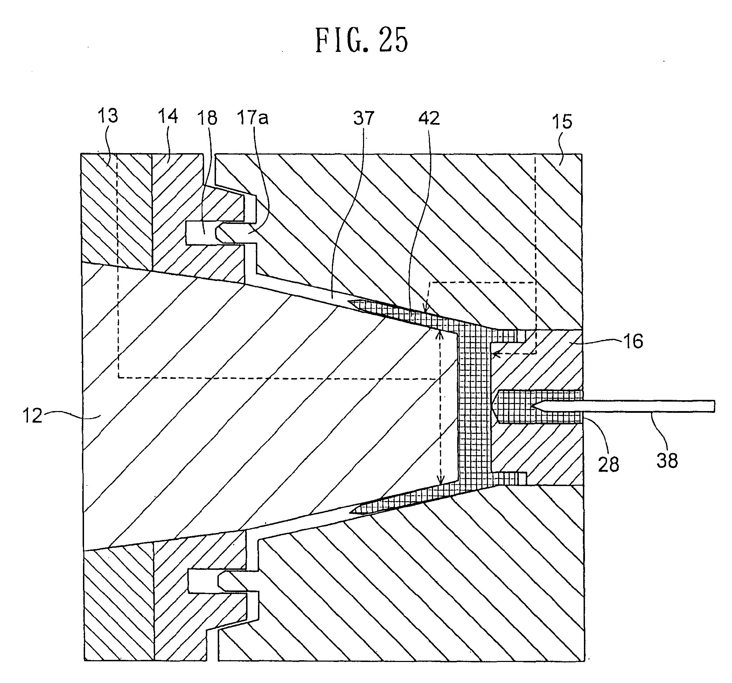

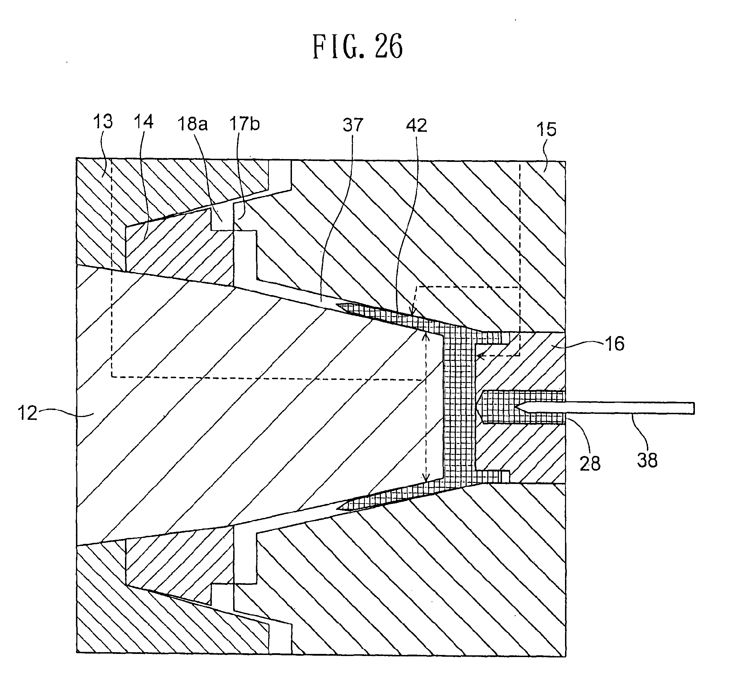

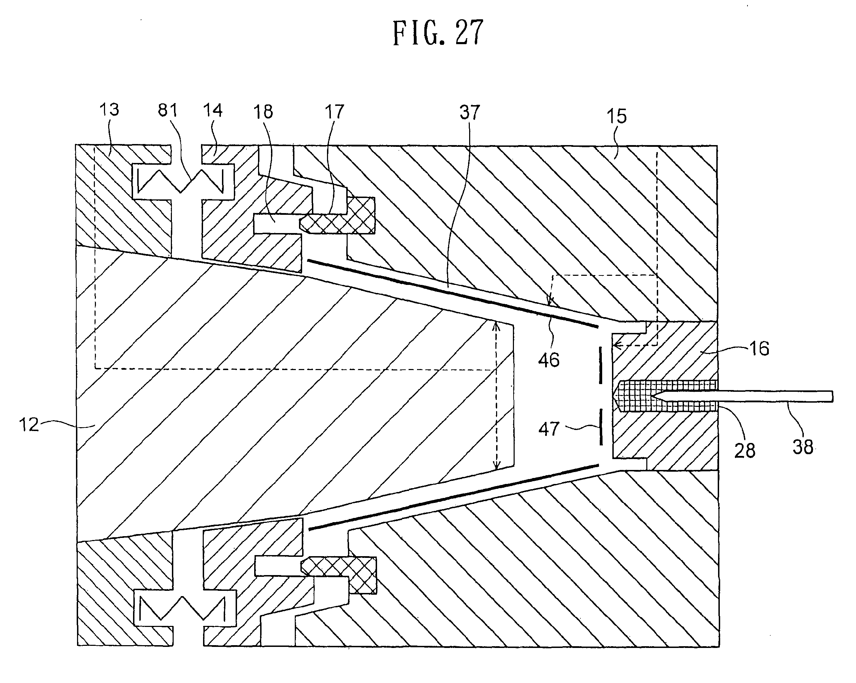

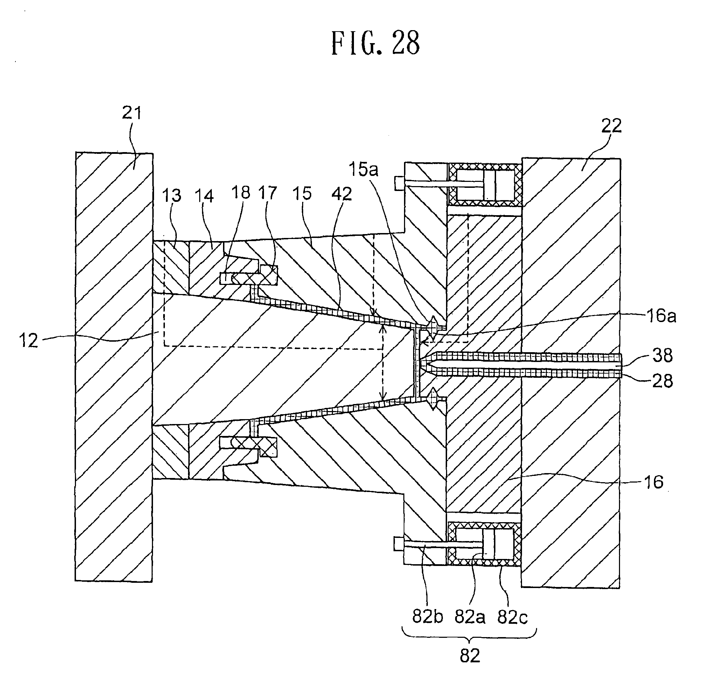

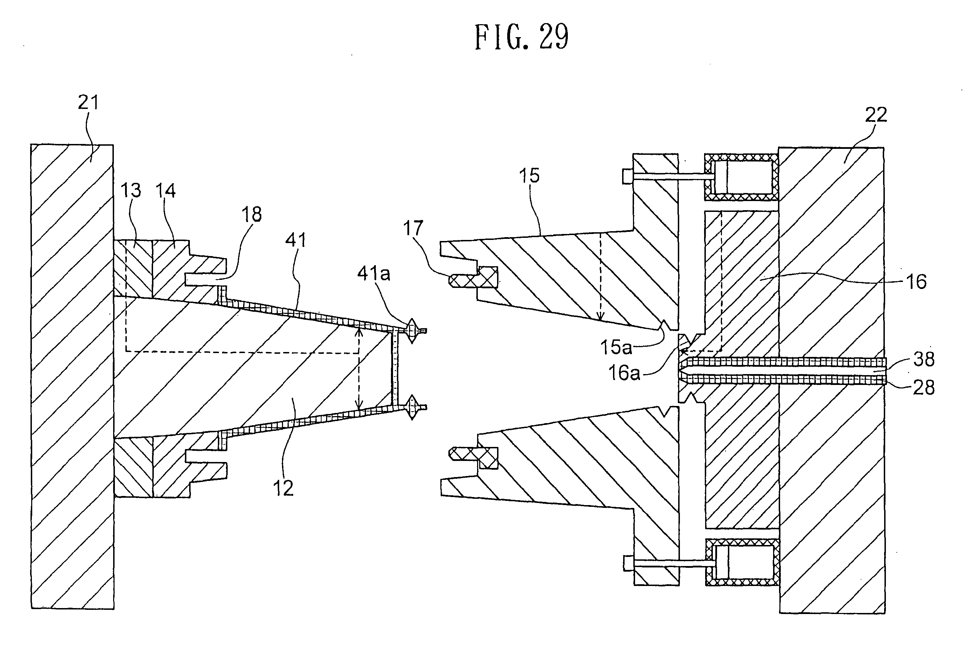

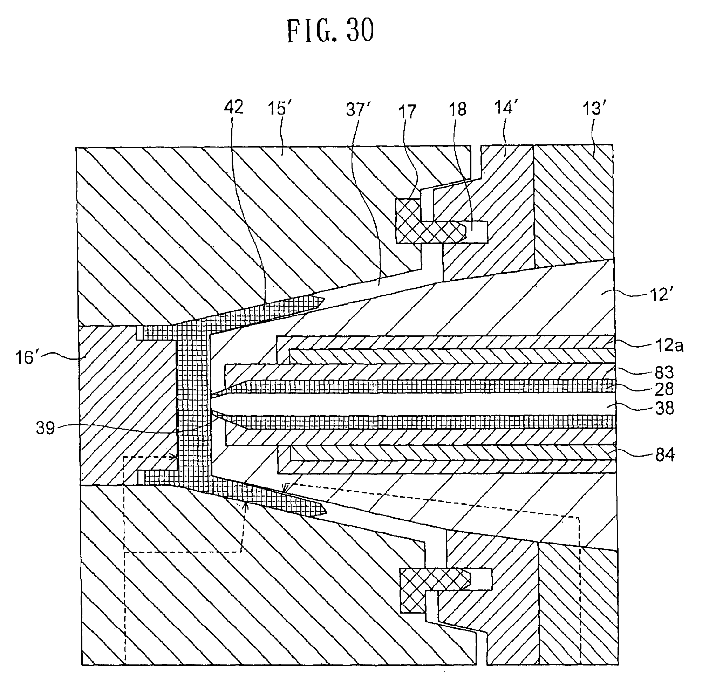

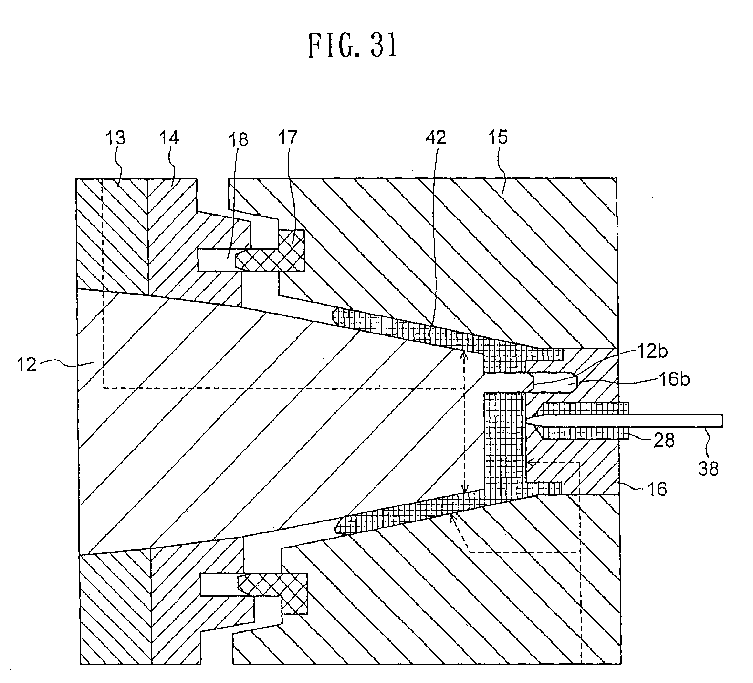

FIG. 1 is a sectional view showing the configuration of a mold apparatus according to a first embodiment of the present invention; FIG. 2 is a view showing a state in which a molten resin is charged into a cavity in a conventional molding method; FIG. 3 is a view showing a state in which the resin contained in the cavity is pressurized and compressed in the conventional molding method; FIG. 4 is a schematic view showing the configuration of an injection molding machine according to the first embodiment of the present invention; FIG. 5 is a perspective view of a molded product according to the first embodiment of the present invention; FIG. 6 is a sectional view of the molded product according to the first embodiment of the present invention; FIG. 7 is a sectional view of the mold apparatus according to the first embodiment of the present invention, and a first view showing a mold-opened condition; FIG. 8 is a sectional view of the mold apparatus according to the first embodiment of the present invention, showing a state in which a molten molding material is charged; FIG. 9 is a sectional view of the mold apparatus according to the first embodiment of the present invention, showing a mold-closed condition; FIG. 10 is a view showing an operation in a mold closing step of the mold apparatus according to the first embodiment of the present invention; FIG. 11 is a sectional view of the mold apparatus according to the first embodiment of the present invention, and a second view showing the mold-opened condition; FIG. 12 is a sectional view of the mold apparatus according to the first embodiment of the present invention, and a first view showing a state in which a molded product is ejected; FIG. 13 is a sectional view of the mold apparatus according to the first embodiment of the present invention, and a second view showing a state in which the molded product is ejected; FIG. 14 is a diagram showing a first operation sequence of the molding machine according to the first embodiment of the present invention; FIG. 15 is a diagram showing a second operation sequence of the molding machine according to the first embodiment of the present invention; FIG. 16 is a diagram showing a third operation sequence of the molding machine according to the first embodiment of the present invention; FIG. 17 is a view showing the shape and dimensions of the molded product according to the first embodiment of the present invention; FIG. 18 is a graph showing the relationship between the quantity of compression of the molding material, and the length of flow and the height of the molded product in the first embodiment of the present invention; FIG. 19 is a first photo showing the shape of the molded product according to the first embodiment of the present invention and making a comparison with a molded product obtained by the conventional molding method; FIG. 20 is a couple of graphs showing a change in injection pressure in the first embodiment of the present invention and a change in injection pressure in the conventional molding method; FIG. 21 is a second photo showing the shape of the molded product according to the first embodiment of the present invention and making a comparison with a molded product obtained by the conventional molding method; FIG. 22 is a perspective view of a label used in a second embodiment of the present invention; FIG. 23 is a sectional view of a mold apparatus according to the second embodiment of the present invention, showing a mold-opened condition; FIG. 24 is a sectional view of a mold apparatus according to a third embodiment of the present invention, showing a state in which a molten molding material is charged; FIG. 25 is a sectional view of a mold apparatus according to a fourth embodiment of the present invention, showing a state in which a molten molding material is charged; FIG. 26 is a sectional view of a mold apparatus according to a fifth embodiment of the present invention, showing a state in which a molten molding material is charged; FIG. 27 is a sectional view of a mold apparatus according to a sixth embodiment of the present invention, showing a state in which a molten molding material is charged; FIG. 28 is a sectional view of a mold apparatus according to a seventh embodiment of the present invention, showing a mold-closed condition; FIG. 29 is a sectional view of the mold apparatus according to the seventh embodiment of the present invention, showing a mold-opened condition; FIG. 30 is a sectional view of a mold apparatus according to an eighth embodiment of the present invention, showing a state in which a molten molding material is charged; and FIG. 31 is a sectional view of a mold apparatus according to a ninth embodiment of the present invention, showing a state in which a molten molding material is charged.

### BEST MODE FOR CARRYING OUT THE INVENTION

Embodiments of the present invention will next be described in detail with reference to the drawings. A method of the present invention can be applied to various kinds of apparatus and applications. However, for convenience of description, the embodiments will be described while mentioning applications to an injection molding machine.

FIG. 4 is a schematic view showing the configuration of an injection molding machine according to a first embodiment of the present invention.

In the drawing, reference numeral 30 denotes an injection apparatus. The injection apparatus 30 includes a heating cylinder 31; an injection nozzle 32 disposed at the front end of the heating cylinder 31; a screw 33 disposed within the heating cylinder 31; and a material feed hopper 34 attached to the heating cylinder 31. Unillustrated drive means rotates, advances (moves leftward), and retreats (moves rightward) the screw 33 in the interior of the heating cylinder 31.

In the injection molding machine, a molding material is melted within the heating cylinder 31 through application of heat; the molten molding material is injected under high pressure into a cavity 37 of a mold apparatus, which will be described later; and the molding material contained in the cavity 37 is cooled and solidified, thereby producing a molded product. In this case, an unillustrated control unit controls the advancement and retreat of the screw 33. In the present embodiment, in place of complicated pressure control in which the advancement and retreat of the screw 33 is controlled in such a manner that the pressure of the molding material to be injected or charged into the cavity 37; i.e., a charging pressure for the molding material, attains a predetermined value, simple position control is performed. Specifically, the position of the screw 33, which advances and retreats irrespective of the charging pressure for the molding material, is controlled. This allows the molding material to be charged into the cavity 37 in a predetermined amount. The predetermined amount corresponds to, for example, about 100% to 150%, preferably about 120%, the volume of the cavity 37 in a mold-closed condition. In place of the position control, a charge time as measured from the start of charging may be controlled.

The present embodiment uses, as molding materials, environmental low-load-type materials, whose load imposed on the environment is low, such as recyclable materials, readily recyclable materials, reusable materials, readily reusable materials, biodegradable materials to be degraded by microorganisms such as bacteria, and materials rarely containing substances conceivably harmful to the environment, such as chlorine. Examples of environmental low-load-type materials include biodegradable materials, such as biodegradable resins also called biodegradable plastics; vegetable-fiber-containing materials prepared by mixing a material containing vegetable fibers, such as paper, pulp, wood, or the like, with a resin; and earth-rock-containing materials prepared by mixing a material containing natural earth-and-rock, such as earth, talc, or the like, with a resin. The environmental low-load-type material may be an appropriate combination of a biodegradable material, a vegetable-fiber-containing material, an earth-rock-containing material, and the like. Preferably, in view of load imposed on the environment, the vegetable-fiber-containing materials and the earth-rock-containing materials have a low resin content; for example, less than 50%. However, they may be of any kind.

The mold apparatus includes a stationary mold 24 and a movable mold 23 and is configured as follows: a mold-clamping apparatus advances and retreats the movable mold 23 so as to bring the movable mold 23 into contact with and move the movable mold 23 away from the stationary mold 24, whereby the mold apparatus can perform mold opening and closing; i.e., mold closing, mold clamping, and mold opening. The mold-clamping apparatus includes a stationary platen 22 for retaining the stationary mold 24, and a movable platen 21 for retaining the movable mold 23, and is operated by driving a hydraulic cylinder apparatus 11, which advances and retreats the movable platen 21.

The stationary platen 22, which serves as a stationary mold support apparatus, is disposed in opposition to the injection apparatus 30. The stationary platen 22 is fixed to an unillustrated frame of the injection molding machine. The stationary mold 24 is mounted on a mold-mounting surface of the stationary platen 22. Ends of a plurality of; for example, four, tie bars 27 are fixed to the stationary platen 22.

The movable platen 21, which serves as a movable-mold support apparatus, is disposed in opposition to the stationary platen 22 and in a manner capable of advancing and retreating along the tie bars 27. Further, the movable mold 23 is mounted on the mold-mounting surface of the movable platen 21, the mold-mounting surface being in opposition to the stationary platen 22.

A drive-source support member 26 is attached to the tie bars 27, in opposition to the back surface of the movable platen 21 and in a positionally adjustable condition. The hydraulic cylinder apparatus 11, which serves as a drive source for the mold-clamping apparatus of the injection molding machine, is attached to the back surface (left-hand surface in the drawing) of the drive-source support member 26. In this case, the hydraulic cylinder apparatus 11 includes a head-side hydraulic chamber 11a; a rod-side hydraulic chamber 11b; a piston 11c; and a rod 11d. The head-side hydraulic chamber 11a is disposed on the piston 11c, on a side opposite the rod 11d, and the rod-side hydraulic chamber 11b is disposed on the piston 11c, on a side toward the rod 11d. The rod 11d is inserted into a through hole formed in the drive-source support member 26, and an end portion thereof is connected to the movable platen 21.

In the present embodiment, no limitation is imposed on the type of the mold-clamping apparatus and on the type of the drive source for the mold-clamping apparatus. For example, the mold-clamping apparatus may be of a straight-hydraulic type as shown in FIG. 4, of a toggle type that utilizes a toggle link, or a composite type in which a link mechanism and a cylinder apparatus are combined. The drive source may be a hydraulic cylinder apparatus as shown in FIG. 4, or a combination of an electric motor and a ball screw.

FIG. 5 is a perspective view of a molded product according to the first embodiment of the present invention. FIG. 6 is a sectional view of the molded product according to the first embodiment of the present invention.

In the present embodiment, a molded product to be produced may assume any shape. The molding method, the mold for molding, and the molding machine according to the present embodiment are characterized in that they can be applied to molding for a molded product 41, which, as shown in FIGS. 5 and 6, has a shape resembling that of a three-dimensional, deep-bottomed, concave container having a thin side wall. Herein, molding for a molded product having a shape resembling that of a three-dimensional, deep-bottomed, concave container having a thin side wall will be described.

Molded products whose shapes resemble that of a three-dimensional, deep-bottomed, concave container having a thin side wall include containers for foods, such as jelly and pudding; cups; containers; caps of containers; and parisons or preforms for use in blow molding. The molded products may be speaker cones for use in loudspeakers, various kinds of cartridges, flowerpots, and like products of any other kind. A molded product to be produced in the present embodiment has, for example, a depth of 10 mm or more and a side wall thickness of 0.2 mm to 3 mm, usually about 1 mm.

Material for a molded product to be produced in the present embodiment is an environmental low-load-type material. The molding method, the mold for molding, and the molding machine according to the present embodiment are characterized in that they can produce a molded product from an environmental low-load-type material in a short time with high accuracy. Therefore, herein, molding for a molded product of an environmental low-load-type material will be described.

FIG. 1 is a sectional view showing the configuration of a mold apparatus according to the first embodiment of the present invention.

In the drawing, reference numeral 12 denotes a mold core of the movable mold 23 mounted on the mold-mounting surface of the movable platen 21; reference numeral 13 denotes a core presser plate for attachment of the mold core 12; and reference numeral 14 denotes a stripper plate attached to the core presser plate 13. Reference numeral 15 denotes a cavity template of the stationary mold 24 mounted on the mold-mounting surface of the stationary platen 22; and reference numeral 16 denotes a gate block fitted into the cavity template 15. As illustrated, in the mold-closed condition, the mold core 12, the stripper plate 14, the cavity template 15, and the gate block 16 define the cavity 37, which has the shape of the molded product 41.

A molding-material flow path 28, such as a sprue, for allowing flow of a molding material ejected from the injection nozzle 32 (FIG. 4) disposed at the front end of the heating cylinder 31 is formed in the stationary platen 22. A gate hole 39 for establishing communication between the interior of the cavity 37 and the molding-material flow path 28 is formed in the gate block 16. This allows the molten molding material ejected from the injection nozzle 32 to be charged into the cavity 37. The molding-material flow path 28 is a hot runner. The molding-material flow path 28 may be a hot runner having a heating unit.

A tongue and a groove are respectively formed on the mutually contacting faces of the stripper plate 14 and the cavity template 15; i.e., on the parting faces of the movable mold 23 and the stationary mold 24, so as to form a tongue-and-groove joint. This prevents leakage of the charged, molten molding material from the cavity 37 through the clearance between the parting faces with resultant generation of burrs.

Further, an insert ring 17 is removably fixed to the parting face of the cavity template 15 by fixing means, such as bolts, countersunk screws, or the like. The insert ring 17 includes a base portion to be fixed to the parting face of the cavity template 15, and a projecting portion projecting toward the parting face of the stripper plate 14, and has a cross section resembling the letter L. Preferably, as illustrated, a groove is formed on the parting face of the cavity template 15 so as to receive the base portion of the insert ring 17.

An insert-ring-receiving groove 18, which is an annular groove, is formed on the parting face of the stripper plate 14 such that, as illustrated, the projecting portion of the insert ring 17 is fitted thereinto. As in the case of a tongue and a groove formed on the corresponding parting faces of the movable mold 23 and the stationary mold 24, the insert ring 17 and the insert-ring-receiving groove 18 prevent leakage of the charged, molten molding material from the cavity 37 through the clearance between the parting faces with resultant generation of burrs.

The above mating structure may be such that the insert ring 17 is fixed to the parting face of the stripper plate 14, while the insert-ring-receiving groove 18 is formed on the parting face of the cavity template 15.

Preferably, the insert ring 17 is formed of a material softer than a material for the stripper plate 14 and the cavity template 15. In this case, in the course of long-term use of the mold apparatus, the stripper plate 14 and the cavity template 15 do not wear, whereas the insert ring 17 wears. Since the insert ring 17 is removably fixed by the fixing means, such as bolts, countersunk screws, or the like, the insert ring 17 can be readily replaced.

An ejection flow path 35 functioning as a pressurized-fluid flow path is formed in the mold core 12 and the core presser plate 13. The ejection flow path 35 communicates with the cavity 37 at one end thereof and with the exterior of the outer wall of the core presser plate 13 at the other end thereof. The other end of the ejection flow path 35 is connected to an unillustrated pressurized-fluid source, such as a compressor, an accumulator, or the like, so that a pressurized fluid, such as pressurized air or the like, from the pressurized-fluid source is supplied into the cavity 37. Thus, even when the molded product 41 adheres to the mold core 12 at the time of mold opening, the molded product 41 can be separated from the mold core 12 by supplying the pressurized fluid through the ejection flow path 35.

Similarly, a ventilation flow path 36 functioning as a pressurized-fluid flow path is formed in the cavity template 15 and the gate block 16. A pressurized fluid, such as pressurized air or the like, from the pressurized-fluid source is supplied into the cavity 37 through the ventilation flow path 36. Thus, even when the molded product 41 adheres to the cavity template 15 at the time of mold opening, the molded product 41 can be separated from the cavity template 15 by supplying the pressurized fluid through the ventilation flow path 36.

FIG. 1 shows a state in which a valve gate pin 38, which serves as a gate pin, is advanced into the molding-material flow path 28. A base portion of the valve gate pin 38 is attached to a piston 72 of a pneumatic cylinder apparatus 73, which is attached to an unillustrated support member of the stationary platen 22 and serves as a drive mechanism. The valve gate pin 38 is moved in the opening-closing direction of the mold apparatus; i.e., in the lateral direction in FIG. 1. The pneumatic cylinder apparatus 73 includes a gate-pin-side pressure chamber 73a and a counter-gate-pin-side pressure chamber 73b, which are located on opposite sides of the piston 72. Pressurized air, which serves as a pressurized fluid, is supplied to the gate-pin-side pressure chamber 73a and the counter-gate-pin-side pressure chamber 73b via a gate-pin-side pipe line 74a and a counter-gate-pin-side pipe line 74b, respectively, thereby operating the pneumatic cylinder apparatus 73. The pressurized air is selectively supplied from a pressurized-fluid source 78 to the gate-pin-side pressure chamber 73a and the counter-gate-pin-side pressure chamber 73b via a selector valve 77. The pressurized-fluid source 78 may supply a pressurized fluid other than pressurized air, such as pressurized oil or the like. Further, the pressurized-fluid source 78 may also serve as the pressurized-fluid source for supplying a pressurized fluid to the ejection flow path 35.

In the state shown in FIG. 1, the tip end of the valve gate pin 38 is advanced into the gate hole 39 and closes the gate hole 39, and the pneumatic cylinder apparatus 73 is in a dwell condition and keeps pressing the valve gate pin 38 toward the gate hole 39 with a predetermined force. The tip end of the valve gate pin 38 is subjected to a force that is induced by the pressure of the molding material contained in the cavity 37 and presses the valve gate pin 38 toward the pneumatic cylinder apparatus 73. A sequence valve 75 and a check valve 76 are connected to the counter-gate-pin-side pipe line 74b. When the pressure of the molding material contained in the cavity 37 attains a predetermined value or higher and causes, via the piston 72, the pressure in the counter-gate-pin-side pressure chamber 73b to attain a predetermined value or higher, the sequence valve 75 is opened. As a result, the piston 72 moves such that the valve gate pin 38 moves toward the pneumatic cylinder apparatus 73 to thereby open the gate hole 39.

In other words, when the pressure of the molding material contained in the cavity 37 attains a predetermined value or higher, the molding material overcomes the force that presses the valve gate pin 38 toward the gate hole 39, thereby moving the valve gate pin 38 toward the pneumatic cylinder apparatus 73. Thus, the valve gate pin 38 opens the gate hole 39. As a result, the molding material leaks into the molding-material flow path 28 from the cavity 37, so that the pressure of the molding material contained in the cavity 37 drops. When the pressure of the molding material drops below the predetermined value, the force that presses the valve gate pin 38 toward the gate hole 39 overcomes the pressure of the molding material. Therefore, the tip end of the valve gate pin 38 again closes the gate hole 39. In this manner, the valve gate pin 38 functions as a constant-pressure valve or a relief valve for maintaining the pressure of the molding material contained in the cavity 37 below the predetermined value.

Unless the pressure of the molding material contained in the cavity 37 attains the predetermined value or higher, the tip end of the valve gate pin 38 maintains such a condition as to be advanced into the gate hole 39 and to close the gate hole 39. Thus, even when the molten molding material contained in the cavity 37 is pressurized and compressed, the molten molding material does not flow back to the molding-material flow path via the gate hole 39.

The valve gate pin 38 may be omitted. For example, in the case where the molding-material flow path 28 is not a hot runner, but is a cold runner so that the molten molding material in the molding-material flow path 28 is prone to be solidified, even when the molten molding material contained in the cavity 37 is pressurized and compressed, the omission of the valve gate pin 38 does not lead to leakage of the molten molding material from the gate hole 39. In this case, the screw 33 within the heating cylinder 31 is retreated in accordance with a set value of a dwell pressure after the molten molding material is charged into the cavity 37, whereby the dwell pressure and the pressure of the molding material in the cavity 37 balance with each other. Thus, by adjustment of the set value of a dwell pressure, the amount of the molten molding material that flows back to the molding-material flow path 28 via the gate hole 39; i.e., the backflow amount, can be controlled. In other words, the backflow amount can be reduced by increasing the set value of the dwell pressure, and the backflow amount can be increased by lowering the set value of the dwell pressure. The application of this control is not limited to the case where the molding-material flow path 28 is a cold runner. Even when the molding-material flow path 28 is a hot runner, the valve gate pin 38 can be omitted, and the backflow amount can be controlled by adjusting the dwell pressure. In this manner, even when the valve gate pin 38 is omitted, by appropriately adjusting the dwell pressure, the backflow of the molten molding material to the molding-material flow path 28 via the gate hole 39 can be controlled such that the backflow amount becomes very small.

Next, the operation of the thus-configured molding machine will be described.

FIG. 7 is a sectional view of the mold apparatus according to the first embodiment of the present invention, and a first view showing a mold-opened condition; FIG. 8 is a sectional view of the mold apparatus according to the first embodiment of the present invention, showing a state in which a molten molding material is charged; FIG. 9 is a sectional view of the mold apparatus according to the first embodiment of the present invention, showing a mold-closed condition; FIG. 10 is a view showing the operation, in a mold closing step, of the mold apparatus according to the first embodiment of the present invention; FIG. 11 is a sectional view of the mold apparatus according to the first embodiment of the present invention, and a second view showing the mold-opened condition; FIG. 12 is a sectional view of the mold apparatus according to the first embodiment of the present invention, and a first view showing a state in which a molded product is ejected; and FIG. 13 is a sectional view of the mold apparatus according to the first embodiment of the present invention, and a second view showing a state in which the molded product is ejected.

First, before molding is started, the piston 11c and the rod 11d of the hydraulic cylinder apparatus 11 are in a retreated condition (in a leftward moved condition in FIG. 4). Thus, the mold apparatus is in the mold-opened condition as shown in FIG. 7. Also, the valve gate pin 38 is in a condition such that its tip end is advanced into the gate hole 39, thereby closing the gate hole 39.

Subsequently, when the mold closing step is started, the hydraulic cylinder apparatus 11 is driven, whereby the piston 11c and the rod 11d advance (move rightward in FIG. 4), thereby causing the movable platen 21 to advance. Thus, the movable mold 23 approaches the stationary mold 24. When, as shown in FIG. 8, the clearance between the parting face of the stripper plate 14 and the parting face of the cavity template 15 becomes a dimension b, the hydraulic cylinder apparatus 11 stops, thereby halting the mold closing step. The dimension b is the quantity of compression of the molding material and is about 3 to 100 times the thickness of the side wall of the molded product 41. The dimension b is usually about 1 mm to 15 mm. The quantity of compression is determined based on the thickness of the side wall of the molded product 41 and the viscosity of a molten molding material 42. Desirably, when the wall thickness of the molded product 41 is 1.5 mm to 3.0 mm, the quantity of compression is 3 to 10 times the wall thickness; and when the wall thickness of the molded product 41 is 0.2 mm to 1.5 mm, the quantity of compression is 10 to 100 times the wall thickness.

While, as shown in FIG. 8, the parting face of the stripper plate 14 and the parting face of the cavity template 15 are opened apart from each other, the valve gate pin 38 moves toward the pneumatic cylinder apparatus 73; i.e., the valve gate pin 38 retreats and opens the gate hole 39. Subsequently, the molten molding material 42 ejected from the injection nozzle 32 disposed at the front end of the heating cylinder 31 is charged, through the molding-material flow path 28, into the cavity 37 between the mold core 12 and the gate block 16, which are in the mold-opened condition. When the molten molding material 42 in a predetermined amount is charged into the cavity 37, the valve gate pin 38 advances. The tip end of the valve gate pin 38 advances into the gate hole 39, thereby closing the gate hole 39.

In this case, a bottom portion of the cavity 37 is filled with the molten molding material 42, the bottom portion being substantially perpendicular to the opening-closing direction of the mold apparatus. However, a portion of a side wall portion of the cavity 37 located distant from the gate hole 39 is not charged with the molten molding material 42, the side wall portion being inclined in relation to the opening-closing direction of the mold apparatus. In other words, in the present embodiment, upon completion of the charging of the molten molding material 42 in the predetermined amount, at least a portion of the side wall portion is not charged with the molten molding material 42.

As shown in FIG. 8, since the volume of the bottom portion is relatively large, the molten molding material 42 is present mainly in the bottom portion of the cavity 37, the bottom portion being sandwiched between the mold core 12 and the gate block 16. The time during which the mold closing step is halted is very short. Accordingly, while the mold closing step is halted, the molten molding material 42 does not leak out to the outside through the clearance between the parting face of the stripper plate 14 and the parting plate of the cavity template 15. Desirably, in order to shorten, to the greatest possible extent, the time during which the mold closing step is halted, the charging speed for the molten molding material 42 is increased to the greatest possible extent. Notably, a halt to the mold closing step may be eliminated. This shortens the molding time of one shot, so that the throughput of the molding machine can be enhanced.

Subsequently, the hydraulic cylinder apparatus 11 resumes driving, causing the movable mold 23 to advance toward the stationary mold 24 to thereby resume the mold closing step. The charging of the molten molding material 42 may be continued in the course of the resumed mold closing step. The resumed mold closing step is a compression step for compressing the molten molding material 42. Even in the case where the charging speed for the molten molding material 42 cannot be increased, this can shorten the molding time of one shot, so that the throughput of the molding machine can be enhanced.

Performing mold closing narrows the cavity 37. As a result, the molten molding material 42 that is present mainly in the bottom portion of the cavity 37, the bottom portion being sandwiched between the mold core 12 and the gate block 16, is pressurized and moves leftward in the drawing within the cavity 37, thereby filling even a portion of the cavity 37 located distant from the gate hole 39 of the side wall portion. Thus, the molten molding material 42 fills the entire cavity 37. In this case, as a result of mold closing, the projecting portion of the insert ring 17 is fitted into the insert-ring-receiving groove 18 formed on the parting face of the stripper plate 14. Thus, the molten molding material 42 is blocked off by the insert ring 17 and therefore does not leak out through the clearance between the parting faces of the movable mold 23 and the stationary mold 24.

Subsequently, even after completion of mold closing, the hydraulic cylinder apparatus 11 presses the movable mold 23 against the stationary mold 24, thereby performing mold clamping. In the mold clamping step, the gate hole 39 formed in the gate block 16 is closed by the valve gate pin 38. In the mold clamping step, since the molten molding material 42 is compressed, not only does the molten molding material 42 reach the entire region of the cavity 37, but also the internal pressure distribution becomes uniform, thereby improving the molecular orientation of the molding material, enhancing the performance of transfer from the surface of the mold, preventing sinkage of the molding material, reducing residual stress, and preventing deformation.

Next will be described the flow of the molten molding material 42 within the side wall portion inclined in relation to the opening-closing direction of the mold apparatus in the mold closing step in which the movable mold 23 advances toward the stationary mold 24. FIG. 10(a) is a view similar to that of FIG. 9. FIG. 10(b) shows, on an enlarged scale, a portion of the side wall portion encircled by circle A of FIG. 10(a). In the mold closing step, since the movable mold 23 approaches the stationary mold 24, the surface of the mold core 12 and the surface of the cavity template 15 undergo relative approach to each other.

In this case, in an initial stage of the mold closing step, the surface of the mold core 12 is located at a position denoted by reference numeral 12a-1. The surface of the cavity template 15 is located at a position denoted by reference numeral 15a. The angle of inclination of the side wall portion in relation to the opening-closing direction of the mold apparatus is θ. Until completion of the mold closing step, the surface of the mold core 12 moves up to a position denoted by reference numeral 12a-2. This indicates that the clearance between the surface of the mold core 12 and the surface of the cavity template 15 in the initial stage of the mold closing step is ΔT greater than a clearance T between the surface of the mold core 12 and the surface of the cavity template 15 at the time of completion of the mold closing step. ΔT is the product of a mold-closing stroke L and sinθ. For example, in the case where θ is 4 degrees, ΔT is 0.2 mm at an L of 3 mm; ΔT is 0.4 mm at an L of 6 mm; ΔT is 0.7 mm at an L of 10 mm; and ΔT is 1 mm at an L of 15 mm.

In the present embodiment, as mentioned previously, charging the molding material into the cavity 37 in a predetermined amount is completed before the mold closing step is completed. This indicates that the molten molding material 42 flows at the time when the clearance between the surface of the mold core 12 and the surface of the cavity template 15 as measured at the side wall portion is ΔT greater than the clearance T as measured upon completion of the mold closing step. Therefore, in the case where the side wall portion is inclined in relation to the opening-closing direction of the mold apparatus, even though the clearance between the surface of the mold core 12 and the surface of the cavity template 15 as measured at the side wall portion is narrow, the molten molding material 42 flows smoothly and fills the entire side wall portion, since the molten molding material 42 flows at the time when the clearance is large. Accordingly, even though, as shown in FIG. 8, a portion of the side wall portion located distant from the gate hole 39 is not charged with the molten molding material 42 at the time when charging the molding material into the cavity 37 in a predetermined amount is completed, the portion of the side wall portion located distant from the gate hole 39 is also charged with the molten molding material 42 as shown in FIG. 9 at the end of the mold closing step.

As described above, since the side wall portion is inclined in relation to the opening-closing direction of the mold apparatus, a wedge effect is yielded, so that the molten molding material 42 spreads throughout the cavity 37. Thus, the internal pressure distribution becomes uniform, thereby improving the molecular orientation of the molding material, improving the optical characteristics of the molding material, enhancing the performance of transfer from the surface of the mold, reducing occurrence of weld lines, preventing sinkage of the molding material, reducing residual stress, and preventing deformation.

Subsequently, the molten molding material 42 is cooled to a certain extent and solidified. When the molded product 41 is produced, mold opening is performed. As shown in FIG. 11, the movable mold 23 and the stationary mold 24 open apart from each other. Immediately before mold opening is performed, a pressurized fluid is supplied into the cavity 37 through the ventilation flow path 36.

Subsequently, the molded product 41 is ejected. As shown in FIG. 11, when the molded product 41 adheres to the outer surface of the mold core 12, the stripper plate 14 is advanced in relation to the mold core 12, and a pressurized fluid is supplied into the cavity 37 through the ejection flow path 35. By this procedure, as shown in FIG. 12, the molded product 41 separates from the mold core 12 and drops. In the case where dropping potentially damages the molded product 41, the molded product 41 can be detached from the mold core 12 by use of an unillustrated molded-product-unloading machine, instead of being dropped.

As shown in FIG. 13, when the molded product 41 adheres to the inner surface of the cavity template 15 and that of the gate block 16, the pressurized fluid is supplied into the cavity 37 through the ventilation flow path 36. By this procedure, the molded product 41 separates from the inner surface of the cavity template 15 and that of the gate block 16 and drops. Alternatively, the molded product 41 can be detached from the inner surface of the cavity template 15 and that of the gate block 16 by use of an unillustrated molded-product-unloading machine, instead of being dropped.

Next, operation sequences of the molding machine will be described.

FIG. 14 is a diagram showing a first operation sequence of the molding machine according to the first embodiment of the present invention; FIG. 15 is a diagram showing a second operation sequence of the molding machine according to the first embodiment of the present invention; and FIG. 16 is a diagram showing a third operation sequence of the molding machine according to the first embodiment of the present invention.

In the present embodiment, when the first operation sequence is executed, the mold-clamping apparatus and the injection apparatus 30 of the molding machine are operated as shown in FIG. 14. First, FIG. 14(a) shows a change, with time, in a mold-clamping force that the clamping apparatus applies to the movable mold 23. In FIG. 14(a), the horizontal axis represents time, and the vertical axis represents the magnitude of a mold-clamping force. FIG. 14(b) shows a change in the position of the movable mold 23 with time, and the vertical axis represents the position of the movable mold 23. The value represented by the vertical axis reduces as the movable mold 23 advances; i.e., as the movable mold 23 approaches the stationary mold 24. FIG. 14(c) represents a change in the position of the screw 33 of the injection apparatus 30 with time. In FIG. 14(c), the horizontal axis represents time, and the vertical axis represents the position of the screw 33. The value represented by the vertical axis reduces as the screw 33 advances; i.e., as the screw 33 approaches the injection nozzle 32. FIGS. 14(a) to (c) employ the same scale for the respective horizontal axes that represent time.

As shown in FIG. 14, when the mold apparatus in the mold-opened condition starts the mold closing step, the mold-clamping force applied by the mold-clamping apparatus increases, and the movable mold 23 advances to approach the stationary mold 24. When the movable mold 23 reaches a predetermined distance to the stationary mold 24; i.e., when the clearance between the parting face of the stripper plate 14 and the parting face of the cavity template 15 becomes the dimension b, the operation of the mold-clamping apparatus halts, and thus the movement of the movable mold 23 halts.

At this point of time, the pneumatic cylinder apparatus 73 operates and moves the valve gate pin 38 toward the pneumatic cylinder apparatus 73; i.e., retreats the valve gate pin 38. Thus, the valve gate pin 38 opens the gate hole 39. In the injection apparatus 30 that has been undergoing a metering step for metering the molten molding material 42 by rotating the screw 33, an injection step is started, thereby advancing the screw 33. By this procedure, the molten molding material 42 is ejected from the injection nozzle 32, thereby starting charging the molten molding material 42 into the cavity 37.

In this case, the advancing movement of the screw 33 is controlled by an unillustrated control unit. In place of complicated pressure control in which the advancement and retreat of the screw 33 is controlled in such a manner that the pressure of the molten molding material 42 to be ejected from the injection nozzle 32 or to be charged into the cavity 37 attains a predetermined value, simple position control is performed. Specifically, the position of the screw 33, which advances irrespective of the pressure of the molten molding material 42, is controlled. This allows the molten molding material 42 to be charged into the cavity 37 in a predetermined amount.

In the course of the charging of the molten molding material 42, the mold-clamping apparatus resumes operating, thereby resuming the mold closing step. In the course of the mold closing step, charging the molten molding material 42 is completed. In other words, the molten molding material 42 is charged into the cavity 37 in an amount that must be charged. Thereupon, the pneumatic cylinder apparatus 73 operates to advance the valve gate pin 38. The tip end of the valve gate pin 38 advances into the gate hole 39, thereby closing the gate hole 39. After charging the molten molding material 42 is completed, the screw 33 is slightly retreated. This reduces the quantity of the molten molding material 42 remaining in the molding-material flow path 28. Thus, when, as a result of the pressure of the molten molding material 42 contained in the cavity 37 attaining a predetermined value or higher, the valve gate pin 38 opens the gate hole 39, and the molten molding material 42 leaks out from the cavity 37 to the molding-material flow path 28, the leaking molten molding material 42 is received within the molding-material flow path 28.

Subsequently, the parting face of the stripper plate 14 and the parting face of the cavity template 15 contact each other, thereby completing the mold closing step. The mold-clamping apparatus increases the mold-clamping force. The mold closing step reduces the volume of the cavity 37 to thereby pressurize and compress the molten molding material 42 contained in the cavity 37. Accordingly, the molten molding material 42 reaches the entire region of the cavity 37, so that the entire cavity 37 is filled with the molten molding material 42. Further, the mold clamping step performed after the mold closing step also pressurizes and compresses the molten molding material 42 contained in the cavity 37. Accordingly, the molten molding material 42 spreads throughout the cavity 37, so that the cavity 37 is completely filled with the molten molding material 42. In this case, the movable mold 23 slightly advances.

The mold-clamping apparatus maintains the increased mold-clamping force, thereby performing high-pressure mold clamping. In high-pressure mold clamping, the movable mold 23 does not advance, but remains stationary. Thus, the molten molding material 42 is subjected to a compressive force, so that the internal pressure distribution becomes uniform, thereby improving the molecular orientation of the molding material, enhancing optical properties of the molding material, enhancing the performance of transfer from the surface of the mold, reducing occurrence of weld lines, preventing sinkage of the molding material, reducing residual stress, and preventing deformation. When the pressure of the molten molding material 42 contained in the cavity 37 attains a predetermined value or higher, the valve gate pin 38 opens the gate hole 39, so that the molten molding material 42 leaks out to the molding-material flow path 28 from the cavity 37; thus, the mold apparatus and the mold-clamping apparatus are free from damage.

As shown in FIG. 15, in the case where charging the molten molding material 42 is completed while the mold closing step is in halt, a second operation sequence is executed. As in the case of FIGS. 14(a) to 14, FIGS. 15(a) to (c) show a change, with time, in a mold-clamping force that the clamping apparatus applies to the movable mold 23, a change in the position of the movable mold 23 with time, and a change in the position of the screw 33 of the injection apparatus 30 with time.

In the second operation sequence, a series of operations covering the start of the mold closing step, a halt to the movement of the movable mold 23, and the start of charging the molten molding material 42 into the cavity 37 is similar to that of the first operation sequence shown in FIG. 14. However, in the second operation sequence, upon completion of the charging of the molten molding material 42, the tip end of the valve gate pin 38 advances into the gate hole 39 to thereby close the gate hole 39, and the mold-clamping apparatus resumes operating to resume the mold closing step.

Operations after completion of the mold closing step are similar to those of the first operation sequence, and repeated description thereof is omitted.

As shown in FIG. 16, in the case where charging the molten molding material 42 is performed without involvement of a halt to the mold closing step, a third operation sequence is executed. As in the case of FIGS. 14(a) to (c), FIGS. 16(a) to (c) show a change, with time, in a mold-clamping force that the clamping apparatus applies to the movable mold 23, a change in the position of the movable mold 23 with time, and a change in the position of the screw 33 of the injection apparatus 30 with time.

In the third operation sequence, the mold closing step is performed without involvement of a halt thereto during the time between the start of the mold closing step and the completion of the mold closing step. In the course of the mold closing step, the charging of the molten molding material 42 is completed, and then the tip end of the valve gate pin 38 advances into the gate hole 39 to thereby close the gate hole 39.

Operations after completion of the mold closing step are similar to those of the first operation sequence, and repeated description thereof is omitted.

Next, the results of experiments will be described.

FIG. 17 is a view showing the shape and dimensions of the molded product according to the first embodiment of the present invention. FIG. 18 is a graph showing the relationship between the quantity of compression of the molding material, and the length of flow and the height of the molded product in the first embodiment of the present invention.

The inventors of the present invention conducted experiments on molding for a molded product 45 having the shape and dimensions shown in FIG. 17 by use of the molding method, the mold for molding, and the molding machine according to the present embodiment. The molded product 45 is a deep-bottomed container having a circular opening. The molding material is LACEA (H-100J), registered trademark of a biodegradable resin produced by Mitsui Chemicals, Inc. The mold apparatus used in the experiments has the cavity 37 whose shape corresponds to the shape and dimensions of the molded product 45. A mold-clamping force of a maximum of 40 tons is applied to the mold apparatus. In the experiments, the injection molding machine was operated in accordance with the second operation sequence described previously.

FIG. 18 shows the results of the experiment in which molding for the molded product 45 was performed while the quantity of compression of the molding material was varied. In the drawing, the horizontal axis represents the quantity (mm) of compression of the molding material, and the vertical axis represents the length (mm) of flow of the molding material and the height (mm) of the molded product. The quantity of compression is the distance between the parting face of the stripper plate 14 and the parting face of the cavity template 15 as measured when charging the molten molding material 42 into the cavity 37 is started; i.e., when the movement of the movable mold 23 is in halt. The length of flow is the maximum distance over which the molten molding material 42 flows within the cavity 37. Specifically, in the cross section of the cavity 37 shown in FIG. 1, the length of flow is a length as measured from the gate hole 39 to the end of the molten molding material 42 that has reached the deepest position (leftmost position in FIG. 1) . The height of the molded product is the height of the molded product 45.

In the experiment, molding was performed while the quantity of compression of the molding material was varied, and the length of flow of the molding material and the height of the molded product 45 were measured. The measured values were plotted, and the graph shown in FIG. 18 was obtained. As is apparent from the graph, when the quantity of compression is small, the molten molding material 42 charged into the cavity 37 fails to reach the depth of the cavity 37; as a result, the height of the molded product 45 becomes short. As the quantity of compression is increased, a region in the cavity 37 where the molten molding material 42 reaches becomes deeper. When the quantity of compression becomes 10 mm or greater, the molten molding material 42 reaches the deepest position in the cavity 37; i.e., the insert ring 17. It is also apparent that the height of the molded product 45 increases with the quantity of compression and that, at a quantity of compression of 10 mm or greater, the height attains a predetermined value; i.e., 49. 5 mm. It was confirmed that, when the quantity of compression attained 12 mm, burrs occurred on the molded product 45.

It is apparent from the above results of experiment that, when the quantity of compression is too small, the molten molding material 42 cannot reach the insert ring 17, which is located at the deepest position of the cavity 37, since the molten molding material 42 cannot pass through a narrow region of the cavity 37. In this case, as is apparent from FIG. 17, since the side wall portion of the molded product 45 has a thickness of 0.35 mm, the narrow portion of the cavity 37 has only a thickness of about 0.35 mm. Accordingly, when the quantity of compression is too small, the molding material is not injected in a metered amount, and the mold closing step hardly reduces the volume of the cavity 37; consequently, the molten molding material 42 contained in the cavity 37 is not sufficiently pressurized and compressed. Thus, the molten molding material 42 fails to reach the depth of the cavity 37.

It is also apparent from the above results of experiment that, when the quantity of compression is too large, the molten molding material 42 advances into the clearance between the projecting portion of the insert ring 17 and the insert-ring-receiving groove 18 and further into the clearance between a portion of the parting face of the stripper plate 14 and a portion of the parting face of the cavity template 15 that are located outside the insert ring 17. The insert ring 17 has a circular shape, but may have an elliptical or polygonal shape.

It is apparent from the above results of experiment that, in molding for the molded product 45 having the shape and dimensions shown in FIG. 17, an appropriate quantity of compression is about 10 mm to 12 mm; i.e., about 29 to 34 times the thickness of the side wall portion of the molded product 45.

In the case where the thickness of the side wall portion of the molded product 45 assumes a smaller value, the clearance of a narrow portion of the cavity 37 corresponding to the side wall portion becomes smaller; thus, a required pressure for enabling passage of the molten molding material 42 through the narrow portion of the cavity 37 becomes greater. Accordingly, in the case where the thickness of the side wall portion of the molded product 45 assumes a small value, an appropriate quantity of compression is up to about 100 times the thickness of the side wall portion of the molded product 45. By contrast, in the case where the thickness of the side wall portion of the molded product 45 assumes a large value, the clearance of the narrow portion of the cavity 37 corresponding to the side wall portion becomes large; thus, a required pressure for enabling passage of the molten molding material 42 through the narrow portion of the cavity 37 becomes small. Accordingly, in the case where the thickness of the side wall portion of the molded product 45 assumes a large value, an appropriate quantity of compression is about 3 times the thickness of the side wall portion of the molded product 45. Therefore, an appropriate quantity of compression is found to be about 3 to 100 times the wall thickness of the molded product 45.

Next, comparison with the prior art will be described.

FIG. 19 is a first photo showing the shape of the molded product according to the first embodiment of the present invention and making a comparison with a molded product obtained by a conventional molding method; FIG. 20 is a couple of graphs showing a change in injection pressure in the first embodiment of the present invention and a change in injection pressure in the conventional molding method; and FIG. 21 is a second photo showing the shape of the molded product according to the first embodiment of the present invention and making a comparison with a molded product obtained by the conventional molding method.

The inventors of the present invention carried out molding for a molded product similar in shape and dimensions to the molded product 45 shown in FIG. 17 by using a biodegradable resin as a molding material and by means of the molding method, the mold for molding, and the molding machine according to the present embodiment, as well as by means of a conventional molding method, a conventional mold for molding, and a conventional molding machine.

In FIG. 19, the rightmost molded product is produced by means of the molding method, the mold for molding, and the molding machine according to the present embodiment, and the leftmost molded product is produced by means of the conventional molding method, the conventional mold for molding, and the conventional molding machine. The central image is of an article obtained by solidifying the molding material without involvement of compression by means of the molding method, the mold for molding, and the molding machine according to the present embodiment, and shows the shape of the molding material as viewed before the compression step starts.

In this case, a polylactic resin was used as a biodegradable resin. Specifically, the molding material used is LACEA (H-100J), registered trademark of a product of Mitsui Chemicals, Inc. The molded product that was produced by means of the molding method, the mold for molding, and the molding machine according to the present embodiment was a margarine container having a diameter of 110 mm, a height of 55 mm, a thickness of the side wall portion of 0.40 mm, and an L/T ratio (length of flow/wall thickness) of 250. The injection molding machine was operated also in accordance with the second operation sequence described previously.

FIG. 20 shows a change, with time, in injection pressure of the injection molding machine in molding for the molded products shown in FIG. 19. FIG. 20(a) shows a change, with time, in injection pressure of the injection molding machine in molding for a molded product by means of the molding method, the mold for molding, and the molding machine according to the present embodiment. FIG. 20(b) shows a change, with time, in injection pressure of the injection molding machine in molding for a molded product by means of the conventional molding method, the conventional mold for molding, and the conventional molding machine.

As is apparent from FIGS. 19 and 20, in the case of molding for a molded product by means of the conventional molding method, the conventional mold for molding, and the conventional molding machine, even when a considerably high injection pressure (maximum injection pressure: 149.6 Mpa) is employed, a molded product having a complete shape cannot be obtained. By contrast, in the case of molding for a molded product by means of the molding method, the mold for molding, and the molding machine according to the present embodiment, even when a high injection pressure (maximum injection pressure: 29.5 Mpa) is employed, a molded product having a complete shape can be obtained.

The inventors of the present invention carried out molding for another molded product by using, as a molding material, a vegetable-fiber-containing material prepared by mixing a material containing vegetable fibers with a resin, and by means of the molding method, the mold for molding, and the molding machine according to the present embodiment, as well as by means of the conventional molding method, the conventional mold for molding, and the conventional molding machine.

In FIG. 21, the rightmost molded product is produced by means of the molding method, the mold for molding, and the molding machine according to the present embodiment, and the leftmost molded product is produced by means of the conventional molding method, the conventional mold for molding, and the conventional molding machine. The central image is of an article obtained by solidifying the molding material without involvement of compression by means of the molding method, the mold for molding, and the molding machine according to the present embodiment, and shows the shape of the molding material as viewed before the compression step starts.

In this case, the vegetable-fiber-containing material used as a molding material was a paper-rich material; i.e., a material prepared by mixing paper and a resin and having a resin content of less than 50%. MFR (melt flow rate) of the molding material is 2.0. The molded product that was produced by means of the molding method, the mold for molding, and the molding machine according to the present embodiment was a dessert cup having a diameter of 90 mm, a height of 55 mm, a thickness of the side wall portion of 0.60 mm, and an L/T ratio (length of flow/wall thickness) of 130. The injection molding machine was operated also in accordance with the second operation sequence described previously.

As is apparent from FIG. 21, in the case where the vegetable-fiber-containing material is used as a molding material, molding by means of the conventional molding method, the conventional mold for molding, and the conventional molding machine fails to yield a molded product. By contrast, molding by means of the molding method, the mold for molding, and the molding machine according to the present embodiment can yield a molded product having a complete shape.

As described above, according to the present embodiment, the molten molding material 42 is charged into the cavity 37 while the parting faces of the movable mold 23 and the stationary mold 24 are separated from each other; subsequently, mold closing and mold clamping are performed.

Thus, mold closing greatly reduces the volume of the cavity 37, so that the molten molding material 42 contained in the cavity 37 is subjected to high pressure. Accordingly, even when an environmental low-load-type material is used as a molding material, the molding material passes through a narrow portion of the cavity 37 corresponding to side wall portions of the molded products 41 and 45 and reaches the depth of the cavity 37. The molten molding material 42 spreads throughout the cavity 37, and the cavity 37 is completely filled with the molten molding material 42. Further, since the molten molding material 42 is subjected to a compressive force, the internal pressure distribution becomes uniform, thereby improving the molecular orientation of the molding material, enhancing the performance of transfer from the surface of the mold, preventing sinkage of the molding material, reducing residual stress, and preventing deformation.

Thus, even when a molded product has a shape resembling that of a three-dimensional, deep-bottomed, concave container having a thin side wall, the molded product can be produced from an environmental low-load-type material, whose moldability is poor, in a short time with high accuracy.

Also, a molded product can have a high L/T ratio, where L is the length of flow of a molding material as measured from a gate, and T is the wall thickness of the molded product.

According to the present embodiment, even at an L/T ratio (length of flow/wall thickness) of, for example, 30 to 300, a molded product can be obtained without involvement of any problem in terms of the pressure distribution in the molded product, the molecular orientation of a molding material, sinkage of the molding material, and the like.

Next, a second embodiment of the present invention will be described. Repeated description of configurational features and operations similar to those of the first embodiment is omitted.

FIG. 22 is a perspective view of a label used in the second embodiment of the present invention. FIG. 23 is a sectional view of a mold apparatus according to the second embodiment of the present invention, showing a mold-opened condition.

In the present embodiment, in-mold labeling is performed; specifically, labels 46 and 47 as shown in FIG. 22 are affixed simultaneously with molding for the molded product 41. In this case, characters, patterns, and the like are previously printed on the labels 46 and 47; the label 46 has a curved surface similar to that of the side wall of the molded product 41; and the label 47 has a shape similar to that of the bottom of the molded product 41, and a hole formed therein for allowing passage therethrough the molten molding material 42 ejected from the injection nozzle 32. One of the labels 46 and 47 may be used; however, the case described herein uses the labels 46 and 47.

Before molding is started, as shown in FIG. 23, the labels 46 and 47 are disposed within the mold apparatus in the mold-opened condition. In this case, the label 46 is disposed on the inner surface of the cavity template 15, and the label 47 is disposed on the face of the gate block 16 that faces the mold core 12.

In the present embodiment, a label-sucking flow path 48 is formed in the cavity template 15 and the gate block 16 such that a first end thereof opens at the inner surface of the cavity template 15 and at the face of the gate block 16 that faces the mold core 12 and such that a second end thereof opens at the outer surface of the cavity template 15. The second end of the label-sucking flow path 48 is connected to an unillustrated sucking apparatus, such as a vacuum pump, so as to suck in air from the first end of the label-sucking flow path 48. Accordingly, as shown in FIG. 23, the label 46 is sucked and adheres to the inner surface of the cavity template 15, and the label 47 is sucked and adheres to the face of the gate block 16 that faces the mold core 12. The label-sucking flow path 48 may also serve as the ejection flow path 35 appearing in the description of the first embodiment.

Subsequently, as described in the description of the first embodiment, mold closing, charging of the molten molding material 42, mold clamping, and the like are performed, thereby yielding the molded product 41 by molding. Thus, an unillustrated molded product 41 to which the labels 46 and 47 are integrally stuck is produced.

Next, a third embodiment of the present invention will be described. Repeated description of configurational features and operations similar to those of the first embodiment is omitted.

FIG. 24 is a sectional view of a mold apparatus according to the third embodiment of the present invention, showing a state in which a molten molding material is charged.

In the present embodiment, a base portion of the insert ring 17 is removably fixed to the parting face of the stripper plate 14 of the movable mold 23 by fixing means, such as bolts, countersunk screws, or the like. A projecting portion of the insert ring 17 projects toward the parting face of the cavity template 15. Desirably, as illustrated, a groove is formed on the parting face of the stripper plate 14 so as to receive the base portion of the insert ring 17.

The insert-ring-receiving groove 18, which is an annular groove, is formed on the parting face of the cavity template 15 such that, as illustrated, the projecting portion of the insert ring 17 is fitted thereinto. As in the case of a tongue and a groove formed on the corresponding parting faces of the movable mold 23 and the stationary mold 24, the insert ring 17 and the insert-ring-receiving groove 18 prevent leakage of the charged, molten molding material 42 from the cavity 37 through the clearance between the parting faces with resultant generation of burrs. Also, the inner circumferential surface of the insert ring 17 positionally restricts the end face of the flange of the molded product.

Next, a fourth embodiment of the present invention will be described. Repeated description of configurational features and operations similar to those of the first to third embodiments is omitted.

FIG. 25 is a sectional view of a mold apparatus according to the fourth embodiment of the present invention, showing a state in which a molten molding material is charged.

In the present embodiment, an annular projecting portion 17a is integrally formed on the parting face of the cavity template 15 of the stationary mold 24. The annular projecting portion 17a projects toward the parting face of the stripper plate 14.

The insert-ring-receiving groove 18, which is an annular groove, is formed on the parting face of the stripper plate 14 such that, as illustrated, the annular projecting portion 17a of the insert ring 17 is fitted thereinto. As in the case of a tongue and a groove formed on the corresponding parting faces of the movable mold 23 and the stationary mold 24, the annular projecting portion 17a and the insert-ring-receiving groove 18 prevent leakage of the charged, molten molding material 42 from the cavity 37 through the clearance between the parting faces with resultant generation of burrs. Also, the inner circumferential surface of the annular projecting portion 17a positionally restricts the end face of the flange of the molded product.

Next, a fifth embodiment of the present invention will be described. Repeated description of configurational features and operations similar to those of the first to fourth embodiments is omitted.

FIG. 26 is a sectional view of a mold apparatus according to the fifth embodiment of the present invention, showing a state in which a molten molding material is charged.

In the present embodiment, a projecting portion 17b is integrally formed at an outer edge portion of the parting face of the cavity template 15 of the stationary mold 24. The projecting portion 17b projects toward the parting face of the stripper plate 14.

A recess portion 18a is formed at an outer edge portion of the parting face of the stripper plate 14 such that, as illustrated, the projecting portion 17b is fitted thereinto. The projecting portion 17b and the recess portion 18a form a tongue-and-groove joint, thereby preventing leakage of the charged, molten molding material 42 from the cavity 37 through the clearance between the parting faces with resultant generation of burrs. Also, the inner circumferential surface of the projecting portion 17b positionally restricts the end face of the flange of the molded product.

Next, a sixth embodiment of the present invention will be described. Repeated description of configurational features and operations similar to those of the first to fifth embodiments is omitted.

FIG. 27 is a sectional view of a mold apparatus according to the sixth embodiment of the present invention, showing a state in which a molten molding material is charged.

In the present embodiment, in-mold labeling is performed; specifically, labels 46 and 47 as shown in FIG. 22 are affixed simultaneously with molding for the molded product 41. In this case, characters, patterns, and the like are previously printed on the labels 46 and 47; the label 46 has a curved surface similar to that of the side wall of the molded product 41; and the label 47 has a shape similar to that of the bottom of the molded product 41, and a hole formed therein for allowing passage therethrough the molten molding material 42 ejected from the injection nozzle 32. One of the labels 46 and 47 may be used; however, the case described herein uses the labels 46 and 47.

Before molding is started, as shown in FIG. 27, the labels 46 and 47 are disposed within the mold apparatus in the mold-opened condition. In this case, the label 46 is disposed on the inner surface of the cavity template 15, and the label 47 is disposed on the face of the gate block 16 that faces the mold core 12.

In the present embodiment, a spring 81 is disposed between the core presser plate 13 and the stripper plate 14 and presses the core presser plate 13 and the stripper plate 14 in such a manner as to expand the clearance therebetween. Since the force of the spring 81 moves the stripper plate 14 toward the stationary mold 24, in a relatively early stage of the mold closing step, the parting face of the stripper plate 14 approaches the parting face of the cavity template 15 as shown in FIG. 27. Accordingly, the stripper plate 14 presses the label 46 disposed within the cavity 37 toward the gate block 16, so that the label 46 is sucked and adheres to the inner surface of the cavity template 15.

A label-sucking flow path may be formed in the cavity template 15 and the gate block 16 such that one end thereof opens at the inner surface of the cavity template 15 and at the face of the gate block 16 that faces the mold core 12 and such that the other end thereof opens at the outer surface of the cavity template 15. In this case, the other end of the label-sucking flow path is connected to a sucking apparatus, such as a vacuum pump, so as to suck in air from the remaining ends of the label-sucking flow path. In this case, the label 46 is sucked and adheres to the inner surface of the cavity template 15, and the label 47 is sucked and adheres to the face of the gate block 16 that faces the mold core 12.

Subsequently, as described in the description of the second embodiment, mold closing, charging of the molten molding material 42, mold clamping, and the like are performed, thereby yielding the molded product 41 by molding. Thus, an unillustrated molded product 41 to which the labels 46 and 47 are integrally stuck to the side wall and the bottom surface, respectively, is produced.

Next, a seventh embodiment of the present invention will be described. Repeated description of configurational features and operations similar to those of the first to sixth embodiments is omitted.

FIG. 28 is a sectional view of a mold apparatus according to the seventh embodiment of the present invention, showing a mold-closed condition. FIG. 29 is a sectional view of the mold apparatus according to the seventh embodiment of the present invention, showing a mold-opened condition.

In the present embodiment, cylinder apparatuses 82 are disposed on the stationary platen 22 on the same side as the mold-mounting surface and adapted to move the cavity template 15 toward the movable mold 23. The cylinder apparatuses 82 are operated by means of pressurized air or pressurized oil and each include a cylinder unit 82c attached to the stationary platen 22 on the same side as the mold-mounting surface; a piston 82a disposed within the cylinder unit 82c; and a piston rod 82b whose base portion is fixed to the piston 82a and whose tip end is fixed to the cavity template 15. When the cylinder apparatuses 82 are not operated, as shown in FIG. 28, the cavity template 15, the gate block 16, and the stationary platen 22 are in close contact with one another.

A recess portion 15a and a recess portion 16a, which serve as undercuts, are formed on the surfaces of the cavity template 15 and the gate block 16, respectively, at mutually opposed positions, the surfaces partially constituting the cavity 37. Thus, as shown in FIG. 29, a projecting portion 41a, which serves as an undercut and projects perpendicularly to the opening-closing direction of the mold apparatus, is formed on the molded product 41.

Mold closing is performed as shown in FIG. 28. Subsequently, mold clamping is performed. The molten molding material 42 is cooled to a certain extent and solidified. When the molded product 41 is produced, mold opening is performed. In this case, the cylinder apparatuses 82 are operated so as to move the cavity template 15 toward the movable mold 23 as shown in FIG. 29. Accordingly, the recess portion 15a and the recess portion 16a shift from each other in the opening-closing direction of the mold apparatus, the recess portions 15a and 16a being formed on the surfaces of the cavity template 15 and the gate block 16, and the surfaces partially constituting the cavity 37. By virtue of elastic deformation of the molded product 41 itself, the projecting portion 41a of the molded product 41 can smoothly come off the recess portions 15a and 16a.

As described above, in the present embodiment, the cavity template 15 can be moved in the opening-closing direction of the mold apparatus. Thus, even when an undercut is formed on the surfaces of the cavity template 15 and the gate block 16, the surfaces partially constituting the cavity 37, the molded product 41 can be ejected by performing mold opening, without damaging the molded product 41.

Next, an eighth embodiment of the present invention will be described. Repeated description of configurational features and operations similar to those of the first to seventh embodiments is omitted.

FIG. 30 is a sectional view of a mold apparatus according to the eighth embodiment of the present invention, showing a state in which a molten molding material is charged.

In the present embodiment, reference numeral 12' denotes a mold core of the stationary mold 24 mounted on the mold-mounting surface of an unillustrated stationary platen; reference numeral 13' denotes a core presser plate for attachment of the mold core 12'; and reference 14' denotes a stripper plate attached to the core presser plate 13'. Reference numeral 15' denotes a cavity template of the movable mold 23 mounted on the mold-mounting surface of an unillustrated movable platen; and reference numeral 16' denotes a gate block fitted into the cavity template 15'. As illustrated, in the mold-closed condition, the mold core 12', the stripper plate 14', the cavity template 15', and the gate block 16' define a cavity 37' having the shape of a molded product. A runner hole 12a is formed in the mold core 12' A hot runner 83 equipped with a heating unit 84 is disposed in the runner hole 12a. The heating unit 84 includes, for example, an electric heater and heats the molten molding material 42 that flows through the molding-material flow path 28.

While the mold closing step is being performed, the molten molding material 42 ejected from an unillustrated injection nozzle flows through the molding-material flow path 28 and is charged into a portion of the cavity 37' formed between the mold core 12' and the gate block 16'. When the molten molding material 42 in a predetermined amount is charged into the cavity 37', the valve gate pin 38 advances. As shown in FIG. 30, the tip end of the valve gate pin 38 advances into the gate hole 39, thereby closing the gate hole 39.

In this case, a bottom portion of the cavity 37' is filled with the molten molding material 42, the bottom portion being substantially perpendicular to the opening-closing direction of the mold apparatus. However, a portion of a side wall portion of the cavity 37' located distant from the gate hole 39 is not charged with the molten molding material 42, the side wall portion being inclined in relation to the opening-closing direction of the mold apparatus. In other words, upon completion of the charging of the molten molding material 42 in the predetermined amount, at least a portion of the side wall portion is not charged with the molten molding material 42.

As shown in FIG. 30, in the present embodiment, the bottom portion of the cavity 37' is located on a side toward the movable platen (at a leftward position in the drawing), and a portion of the side wall portion of the cavity 37' located distant from the gate hole 39 is located on a side toward the stationary platen (at a rightward position in the drawing). Accordingly, the position of the gate hole 39 corresponds to the inner surface of a bottom portion of a container, which is a molded product. Thus, the outer surface of the bottom portion of the container is free from the mark of the gate hole 39 and becomes smooth, so that decoration, such as patterns, can be marked on the surface by printing or any other suitable method.

Next, a ninth embodiment of the present invention will be described. Repeated description of configurational features and operations similar to those of the first to eighth embodiments is omitted.

FIG. 31 is a sectional view of a mold apparatus according to the ninth embodiment of the present invention, showing a state in which a molten molding material is charged.

In the present embodiment, a projecting portion 12b is formed integrally with the face of the mold core 12 of the movable mold 23, the face facing the gate block 16 of the stationary mold 24. The projecting portion 12b projects toward the gate block 16. A recess portion 16b is formed on the face of the gate block 16, the face facing the mold core 12. The projecting portion 12b is fitted into the recess portion 16b. The projecting portion 12b and the recess portion 16b may be provided singly or plurally.

Thus, a through hole is formed in the bottom portion of the container, which is a molded product, at a position corresponding to the projecting portion 12b. Therefore, the present embodiment is suited for molding a container whose bottom portion has a through hole formed therein, such as a flowerpot.

The above embodiments are described while mentioning a hydraulic mold-clamping apparatus. However, a motor-driven mold-clamping apparatus is preferred. The above embodiments are also described while mentioning a horizontal injection molding machine, in which the movable platen moves laterally (horizontally). However, the molding method, the mold for molding, and the molding machine of the present invention can also be applied to a vertical injection molding machine, in which the movable platen moves longitudinally (vertically). Further, the molding method, the mold for molding, and the molding machine of the present invention can be applied not only to injection molding machines, but also to other types of molding machines such as die casting machines and IJ sealing presses.

The present invention is not limited to the above-described embodiments. Numerous modifications and variations of the present invention are possible in light of the spirit of the present invention, and they are not excluded from the scope of the present invention.

For example, the present invention encompasses a molding method characterized in the following: a molding material is charged into a cavity while the parting face of a movable mold and the parting face of a stationary mold are separated from each other; and the movable mold is advanced by a quantity of compression equal to 3 to 100 times the wall thickness of a molded product so as to press the parting face of the movable mold against the parting face of the stationary mold, thereby yielding the molded product by molding.

The present invention also encompasses the above-mentioned molding method in which, when the wall thickness of the molded product is 1.5 mm to 3.0 mm, the quantity of compression is 3 to 10 times the wall thickness and in which, when the wall thickness of the molded product is 0.2 mm to 1.5 mm, the quantity of compression is 10 to 100 times the wall thickness.

The present invention further encompasses the above-mentioned molding method in which the molded product has a shape resembling that of a deep-bottomed, concave container having a thin side wall.

The present invention further encompasses the above-mentioned molding method in which the quantity of compression is determined based on the thickness of the side wall of the molded product and the viscosity of the molding material.

The present invention further encompasses the above-mentioned molding method in which, when the movable mold is advanced, a gate hole formed in the stationary mold is closed with a gate pin.

As described above in detail, in the molding method according to the present invention, before completion of a mold closing step of a mold apparatus, charging a molding material into a cavity of the mold apparatus is started; before completion of the mold closing step, charging the molding material in a predetermined amount is completed; and after completion of the mold closing step, a mold clamping step of the mold apparatus is performed, thereby yielding a molded product of an environmental low-load-type material by molding.

In this case, mold closing greatly reduces the volume of the cavity, so that the molding material contained in the cavity is subjected to high pressure. Thus, even when the molding material is of poor moldability, the molding material reaches the depth of the cavity. The molten molding material spreads throughout the cavity and completely fills the cavity. Since the molding material is subjected to a compressive force, the internal pressure distribution becomes uniform, thereby improving the molecular orientation of the molding material, enhancing the performance of transfer from the surface of the mold, preventing sinkage of the molding material, reducing residual stress, and preventing deformation.

Accordingly, a molded product having a shape resembling that of a three-dimensional, deep-bottomed, concave container having a thin side wall can be produced from an environmental low-load-type material in short time with high accuracy.

Further, since, before completion of the mold closing step, charging the molding material in the predetermined amount is completed, there is no need to control the charging pressure for the molding material. Accordingly, the screw position of the injection apparatus can be controlled irrespective of the charging pressure for the molding material, thereby facilitating control of the injection apparatus.

In another molding method, the screw is advanced so as to charge the molding material in the predetermined amount; and, after completion of charging the molding material in the predetermined amount, the screw is retreated so as to adjust a dwell pressure for controlling an amount of backflow of the molding material from the cavity.

In this case, the quantity of the molding material remaining in a molding-material flow path reduces. Thus, when, as a result of the pressure of the molding material contained in the cavity attaining a predetermined value or higher, the molding material leaks out from the cavity to the molding-material flow path, the leaking molding material is received within the molding-material flow path.

The mold for molding includes a stationary mold having a parting face; a movable mold having a parting face to be pressed, in a close contact condition, against the parting face of the stationary mold, and advancing toward the stationary mold; an insert ring having a base portion to be fixed on one of the parting faces, and a projecting portion; and an annular groove formed on the other parting face and receiving the projecting portion of the insert ring. The mold for molding is used to mold an environmental low-load-type material.

In this case, since a molten molding material filling the cavity does not leak out through the clearance between the parting faces, burrs are not generated.

The molded product is produced by molding by the above-mentioned molding method.

In this case, there can be obtained a molded product formed from an environmental low-load-type material and exhibiting uniform, internal pressure distribution, a good molecular orientation of the molding material, a good performance of transfer from the surface of the mold, no sinkage of the molding material, a low residual stress, and no deformation.

Another molded product is a thin-walled concave container molded by an injection molding machine; has a wall thickness of 0.2 mm to 1.0 mm; and is produced from an environmental low-load-type material.

In this case, the thin-walled molded product can be obtained in a short time with high accuracy.

Still another molded product is a concave container produced from an environmental low-load-type material. The container has an L/T ratio (L: length of the molded product corresponding to a length of flow of the molding material as measured from a gate; T: wall thickness of the molded product) of 30 to 300.

In this case, a three-dimensional, thin-walled, highly accurate container can be obtained.

In the molding method, in a mold-closed condition before completion of a mold closing step of a mold apparatus, there is started charging a molding material into a cavity having a bottom portion substantially perpendicular to an opening-closing direction of the mold apparatus, and a thin side wall portion inclined in relation to the opening-closing direction; before completion of the mold closing step, the charging of the molding material in a predetermined amount into the cavity is completed in such a manner that at least a portion of the side wall portion is not charged with the molding material; and after completion of the mold closing step, a mold clamping step of the mold apparatus is performed so as to produce a molded product of an environmental low-load-type material.

In this case, mold closing greatly reduces the volume of the cavity, so that the molding material contained in the cavity is subjected to high pressure. Accordingly, even an environmental low-load-type material reaches the depth of the cavity. Since the side wall portion is inclined in relation to the opening-closing direction of the mold apparatus, a wedge effect is yielded, so that the molding material spreads throughout the cavity, and the cavity is completely filled with the molding material. Further, since the molding material is subjected to a compressive force, the internal pressure distribution becomes uniform, thereby improving the molecular orientation of the molding material, enhancing the performance of transfer from the surface of the mold, preventing sinkage of the molding material, reducing residual stress in the molded product, and preventing deformation.

Accordingly, even a molded product having a shape resembling that of a three-dimensional, deep-bottomed, concave container having a thin side wall can be produced from an environmental low-load-type material in short time with high accuracy.

Further, since, before completion of the mold closing step, charging the molding material in the predetermined amount is completed, there is no need to control the charging pressure for the molding material. Accordingly, the screw position of the injection apparatus can be controlled irrespective of the charging pressure for the molding material, thereby facilitating control of the injection apparatus.

In yet another molding method, a label is placed within the cavity, and in-mold labeling and molding are performed together.

In this case, a molded product to which a label is integrally affixed can be readily produced.

Another mold for molding includes a stationary mold having a parting face; a movable mold having a parting face to be pressed, in a close contact condition, against the parting face of the stationary mold, and forming, between the same and the stationary mold and in a mold-closed condition, a cavity having a bottom portion substantially perpendicular to an opening-closing direction, and a thin side wall portion inclined in relation to the opening-closing direction; an annular projection member disposed on one of the parting faces; and an annular groove formed on the other parting face and receiving the annular projection member. The mold for molding is used for molding an environmental low-load-type material.

In this case, since the molten molding material filling the cavity does not leak out through the clearance between the parting faces, burrs are not generated. Also, since the side wall portion is inclined in relation to the opening-closing direction of the mold apparatus, a wedge effect is yielded, so that the molding material spreads throughout the cavity, and the cavity is completely filled with resin.

### INDUSTRIAL APPLICABILITY

The present invention can be applied to a molding method, a mold for molding, a molded product, and a molding machine.

## Claims

1. A molding method **characterized by** comprising:
(a) starting, before completion of a mold closing step of a mold apparatus, charging a molding material into a cavity of the mold apparatus;
(b) completing, before completion of the mold closing step, the charging of the molding material in a predetermined amount; and
(c) performing, after completion of the mold closing step, a mold clamping step of the mold apparatus so as to produce a molded product of an environmental low-load-type material.

2. A molding method according to claim 1, wherein the molding material is charged into the cavity in the predetermined amount by means of controlling a position of a screw of an injection apparatus or a charging time for the molding material.

3. A molding method according to claim 1 or 2, wherein the screw is advanced so as to charge the molding material in the predetermined amount, and, after completion of the charging of the molding material in the predetermined amount, the screw is retreated so as to adjust a dwell pressure for controlling an amount of backflow of the molding material from the cavity.

4. A mold for molding **characterized by** comprising:
(a) a stationary mold having a parting face;
(b) a movable mold having a parting face to be pressed, in a close contact condition, against the parting face of the stationary mold, and advancing toward the stationary mold;
(c) an insert ring having a base portion fixed to one of the parting faces, and a projecting portion; and
(d) an annular groove formed on the other parting face and receiving the projecting portion of the insert ring; and
(e) **characterized by** being used for molding an environmental low-load-type material.

5. A molded product of the environmental low-load-type material produced by the molding method according to any one of claims 1 to 3.

6. A molded product **characterized in that** the molded product is a thin-walled concave container molded by an injection molding machine, has a wall thickness of 0.2 mm to 1.0 mm, and is produced from an environmental low-load-type material.

7. A molded product **characterized in that**:
(a) the molded product is a concave container produced from an environmental low-load-type material, and
(b) the container has an L/T ratio (L: length of the molded product corresponding to a length of flow of the molding material as measured from a gate; T: wall thickness of the molded product) of 30 to 300.

8. A molding method **characterized by** comprising:
(a) starting, in a mold-closed condition before completion of a mold closing step of a mold apparatus, charging a molding material into a cavity having a bottom portion substantially perpendicular to an opening-closing direction of the mold apparatus, and a thin side wall portion inclined in relation to the opening-closing direction;
(b) completing, before completion of the mold closing step, the charging of the molding material in a predetermined amount into the cavity in such a manner that at least a portion of the side wall portion is not charged with the molding material; and
(c) performing, after completion of the mold closing step, a mold clamping step of the mold apparatus so as to produce a molded product of an environmental low-load-type material.

9. A molding method according to claim 8, wherein a label is placed within the cavity, and in-mold labeling and molding are performed together.

10. A mold for molding **characterized by** comprising:
(a) a stationary mold having a parting face;
(b) a movable mold having a parting face to be pressed, in a close contact condition, against the parting face of the stationary mold, and forming, between the same and the stationary mold and in a mold-closed condition, a cavity having a bottom portion substantially perpendicular to an opening-closing direction, and a thin side wall portion inclined in relation to the opening-closing direction;
(c) an annular projection member disposed on one of the parting faces; and
(d) an annular groove formed on the other parting face and receiving the annular projection member; and
(e) **characterized by** being used for molding an environmental low-load-type material.

11. A molding machine **characterized by** comprising:
(a) a mold apparatus for producing a molded product of an environmental low-load-type material by use of a stationary mold and a movable mold; and
(b) **characterized in that** the mold apparatus has a cavity for forming an outline of the molded product, and
(c) the cavity, with the stationary mold and the movable mold in a mold-closed condition, includes a bottom portion substantially perpendicular to an opening-closing direction of the mold apparatus, and a thin side wall portion inclined in relation to the opening-closing direction.

12. A molding machine **characterized by**
(a) molding an environmental low-load-type material by use of a mold apparatus, and
(b) **characterized in that** the mold apparatus comprises a stationary mold having a parting face;
(c) a movable mold having a parting face to be pressed, in a close contact condition, against the parting face of the stationary mold, and advancing toward the stationary mold;
(d) an annular projection member disposed on one of the parting faces; and
(e) an annular groove formed on the other parting face and receiving the projection member.
